(19) Europäisches Patentamt
European Patent Office
Office européen des brevets

(11) **EP 3 125 632 B1**

(12) **EUROPEAN PATENT SPECIFICATION**

(45) Date of publication and mention
of the grant of the patent:
**24.03.2021 Bulletin 2021/12**

(21) Application number: **15767890.5**

(22) Date of filing: **26.03.2015**

(51) Int Cl.:
*H04W 72/08* (2009.01)          *H04W 4/08* (2009.01)
*H04L 5/00* (2006.01)          *H04L 25/02* (2006.01)
*H04L 5/14* (2006.01)

(86) International application number:
**PCT/KR2015/002977**

(87) International publication number:
**WO 2015/147569 (01.10.2015 Gazette 2015/39)**

(54) **METHOD AND APPARATUS FOR ALLOCATING RESOURCES IN WIRELESS ACCESS SYSTEM SUPPORTING FDR TRANSMISSION**

VERFAHREN UND VORRICHTUNG ZUR RESSOURCENZUWEISUNG IN EINEM DRAHTLOSZUGANGSSYSTEM MIT UNTERSTÜTZUNG VON FDR-ÜBERTRAGUNG

PROCÉDÉ ET APPAREIL PERMETTANT D'ATTRIBUER DES RESSOURCES DANS UN SYSTÈME D'ACCÈS SANS FIL PRENANT EN CHARGE LA TRANSMISSION FDR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2014 US 201461970877 P**
**01.05.2014 US 201461987439 P**

(43) Date of publication of application:
**01.02.2017 Bulletin 2017/05**

(73) Proprietor: **LG Electronics Inc.**
**Yeongdeungpo-gu**
**Seoul 07336 (KR)**

(72) Inventors:
• **NOH, Kwangseok**
**Seoul 137-893 (KR)**
• **CHUNG, Jaehoon**
**Seoul 137-893 (KR)**
• **HAHN, Genebeck**
**Seoul 137-893 (KR)**
• **LEE, Eunjong**
**Seoul 137-893 (KR)**
• **KIM, Jinmin**
**Seoul 137-893 (KR)**
• **CHOI, Kukheon**
**Seoul 137-893 (KR)**

(74) Representative: **Plasseraud IP**
**66, rue de la Chaussée d'Antin**
**75440 Paris Cedex 09 (FR)**

(56) References cited:
WO-A1-2013/134930          WO-A1-2013/178084
US-A1- 2009 268 645          US-A1- 2009 325 578
US-A1- 2010 177 717          US-A1- 2011 045 831
US-A1- 2013 150 106

• HUAWEI ET AL: "Interference mitigation schemes for TDD eIMTA", 3GPP DRAFT; R1-130015, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 19 January 2013 (2013-01-19), XP050663497, Retrieved from the Internet: URL:http://www.3gpp.org/ftp/tsg_ran/WG1_RL 1/TSGR1_72/Docs/ [retrieved on 2013-01-19]

**Description**

[Technical Field]

The present invention relates to a wireless access system supporting a Full Duplex Radio (FDR) transmission environment and, more particularly, to a method for efficiently transmitting and receiving a signal when FDR is applied and an apparatus supporting the same.

[Background Art]

Wireless communication systems have been widely used to provide various kinds of communication services such as voice or data services. Generally, a wireless communication system is a multiple access system that can communicate with multiple users by sharing available system resources (bandwidth, transmission (Tx) power, and the like). A variety of multiple access systems can be used. For example, a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency-Division Multiple Access (SC-FDMA) system, a MultiCarrier Frequency Division Multiple Access (MC-FDMA) system, and the like.
International application publication No. WO 2013/134930 A1 describes a method and apparatus for reducing radio interferences.

[Disclosure]

[Technical Problem]

An object of the present invention is to provide methods for efficiently transmitting and receiving a signal in a wireless access system supporting FDR transmission.
Another object of the present invention is to provide an apparatus supporting the above methods.
The technical objects that can be achieved through the present invention are not limited to what has been particularly described hereinabove and other technical objects not described herein will be more clearly understood by persons skilled in the art from the following detailed description.

[Technical Solution]

According to an aspect of the present invention devised to solve the above problems, a method of allocating a resource by a Base Station (BS) in a wireless access system supporting Full Duplex Radio (FDR) transmission is provided as set forth in the appended claims.
According to another aspect of the present invention, a Base Station (BS) for allocating a resource in a wireless access system supporting Full Duplex Radio (FDR) transmission is provided as set forth in the appended claims.
Any reference to inventions or embodiments not falling within the scope of the independent claims are to be interpreted as examples useful for understanding the invention. [14]

[Description of Drawings]

FIG. 1 illustrates the structure of a radio frame in 3GPP LTE.
FIG. 2 illustrates exemplary frame configurations in the structure of the radio frame of FIG. 1 .
FIG. 3 is a diagram illustrating the structure of a downlink subframe.
FIG. 4 is a diagram illustrating the structure of an uplink subframe.
FIG. 5 illustrates the configuration of a wireless communication system supporting MIMO.
FIG. 6 illustrates an exemplary CRS and DRS pattern for one resource block.
FIG. 7 illustrates an exemplary DM RS pattern defined for the LTE-A system.
FIG. 8 illustrates exemplary CSI-RS patterns defined for the LTE-A system.
FIG. 9 is a diagram illustrating an exemplary Zero-Power (ZP) CSI-RS pattern defined in an LTE-A system.
FIG. 10 illustrates an exemplary system supporting FDR transmission.
FIG. 11 illustrates exemplary inter-device interference.
FIG. 12 illustrates an exemplary FDMA and TDMA operation when an eNB operates in a Full Duplex (FD) mode on the same resource and UEs perform multiple access.

FIG. 13 is a flowchart illustrating an initial grouping configuration method according to a first embodiment of the present invention.

FIG. 14 illustrates exemplary allocation of a bit indicating whether to participate in grouping.

FIG. 15 illustrates exemplary arrangement of an eNB and UEs for cell-specific grouping and exemplary group configuration.

FIG. 16 illustrates arrangement based on IDI measured by UEs in order of a high value.

FIG. 17 illustrates averages of values in columns of FIG. 16.

FIG. 18 illustrates selection of UEs for configuring a first group

FIG. 19 illustrates selection of target UEs with respect to the other UEs except for UEs a, d, and g configured as a group.

FIG. 20 illustrates configuration of a first best relation based group when IDI is arranged in order of a low value contrary to FIG. 16.

FIG. 21 illustrates selection of target UEs as in FIG. 20 except for UEs b and c to configure a second group after the UEs b and c are configured as a group.

FIG. 22 illustrates selection of target UEs after FIG. 21.

FIG. 23 illustrates exemplary groups configured based on best relation based grouping.

FIG. 24 is a flowchart illustrating grouping update according to a second embodiment of the present invention.

FIG. 25 illustrates an example of determining a grouping candidate UE using a bit for a grouping participation request and a bit indicating whether the UE has been included in a group.

FIG. 26 illustrates exemplary frequency allocation for IDI measurement to grouping candidate UEs.

FIG. 27 illustrates an exemplary FD mode operation performed by a UE on the same resource.

FIG. 28 illustrates a BS and a UE that are applicable to an embodiment of the present invention.


[Best Mode]

The following embodiments are proposed by combining constituent components and characteristics of the present invention according to a predetermined format. The individual constituent components or characteristics should be considered to be optional factors on the condition that there is no additional remark. If required, the individual constituent components or characteristics may not be combined with other components or characteristics. Also, some constituent components and/or characteristics may be combined to implement the embodiments of the present invention. The order of operations to be disclosed in the embodiments of the present invention may be changed to another. Some components or characteristics of any embodiment may also be included in other embodiments, or may be replaced with those of the other embodiments as necessary.

The embodiments of the present invention are disclosed on the basis of a data communication relationship between a Base Station (BS) and a terminal. In this case, the BS is used as a terminal node of a network via which the BS can directly communicate with the terminal. Specific operations to be conducted by the BS in the present invention may also be conducted by an upper node of the BS as necessary.

In other words, it will be obvious to those skilled in the art that various operations for enabling the BS to communicate with the terminal in a network composed of several network nodes including the BS will be conducted by the BS or other network nodes other than the BS. The term "BS" may be replaced with a fixed station, Node B, evolved Node B (eNB or eNode B), or an Access Point (AP) as necessary. The term "relay" may be replaced with a Relay Node (RN) or a Relay Station (RS). The term "terminal" may also be replaced with a User Equipment (UE), a Mobile Station (MS), a Mobile Subscriber Station (MSS) or a Subscriber Station (SS) as necessary.

It should be noted that specific terms disclosed in the present invention are proposed for the convenience of description and better understanding of the present invention, and the use of these specific terms may be changed to another format within the technical scope or spirit of the present invention.

In some instances, well-known structures and devices are omitted in order to avoid obscuring the concepts of the present invention and the important functions of the structures and devices are shown in block diagram form. The same reference numbers will be used throughout the drawings to refer to the same or like parts.

Embodiments of the present invention are supported by standard documents disclosed for at least one of wireless access systems including an Institute of Electrical and Electronics Engineers (IEEE) 802 system, a 3rd Generation Project Partnership (3GPP) system, a 3GPP Long Term Evolution (LTE) system, and a 3GPP2 system. In particular, the steps or parts, which are not described to clearly reveal the technical idea of the present invention, in the embodiments of the present invention may be supported by the above documents. All terminology used herein may be supported by at least one of the above-mentioned documents.

The following embodiments of the present invention can be applied to a variety of wireless access technologies, for example, Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), and the like. CDMA may be embodied with wireless (or radio) technology such as Universal Terrestrial Radio Access (UTRA) or CDMA2000. TDMA may be embodied with wireless (or radio) technology such as Global System for Mobile communications (GSM)/General Packet Radio Service (GPRS)/Enhanced Data Rates for GSM Evolution (EDGE). OFDMA may be embodied with wireless (or radio) technology such as Institute of Electrical and Electronics Engineers (IEEE) 802.11 (Wi-Fi), IEEE 802.16 (WiMAX), IEEE 802-20, and Evolved UTRA (E-UTRA). UTRA is a part of Universal Mobile Telecommunications System (UMTS). 3rd Generation Partnership Project Long Term Evolution (3GPP LTE) is a part of Evolved UMTS (E-UMTS), which uses E-UTRA. 3GPP LTE employs OFDMA in downlink and employs SC-FDMA in uplink. LTE-Advanced (LTE-A) is an evolution of 3GPP LTE. WiMAX can be explained by an IEEE 802.16e (WirelessMAN-OFDMA Reference System) and an advanced IEEE 802.16m (WirelessMAN-OFDMA Advanced System). For clarity, the following description focuses on the 3GPP LTE and LTE-A systems. However, the technical features of the present invention are not limited thereto.

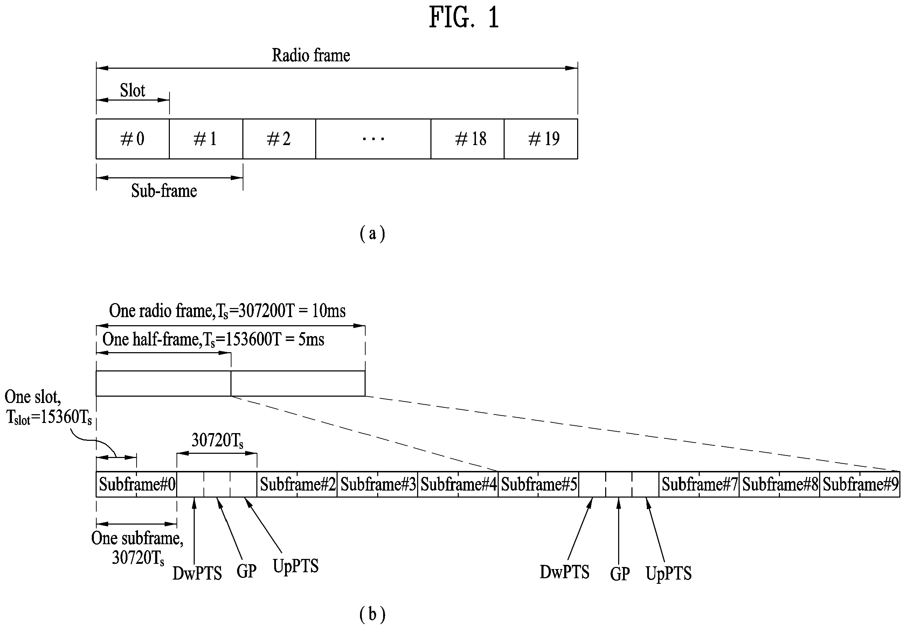

FIG. 1 illustrates the structure of a radio frame in 3GPP LTE.

Frame structure type 2 is illustrated in FIG. 1. Frame structure type 2 is applicable to a Time Division Duplex (TDD) system. One radio frame has a length of $T_f = 307200 \cdot T_s$ = 10ms and includes two half frames each having a length of $153600 \cdot T_s$ = 5ms. Each half frame includes 5 subframes each having a length of $30720 \cdot T_s$ = 1ms. An i-th sub frame includes two slots 2i and 2i+1 each having a length of $T_{slot} = 15360 \cdot T_s$ = 0.5ms. Ts is a sampling time given as Ts=1/(15kHz×2048)=3.2552×10-8 (about 33ns).

Frame structure type 2 includes a special subframe having three fields: a Downlink Pilot Time Slot (DwPTS), a Guard Period (GP), and an Uplink Pilot Time Slot (UpPTS). The DwPTS is used for initial cell search, synchronization, or channel estimation at a UE. The UpPTS is used for channel estimation and uplink transmission synchronization with a UE at an eNB. The GP is used to cancel interference between an uplink and a downlink, caused by multi-path delay of a downlink signal. The DwPTS, the GP, and the UpPTS are included in the special subframe of Table 1.

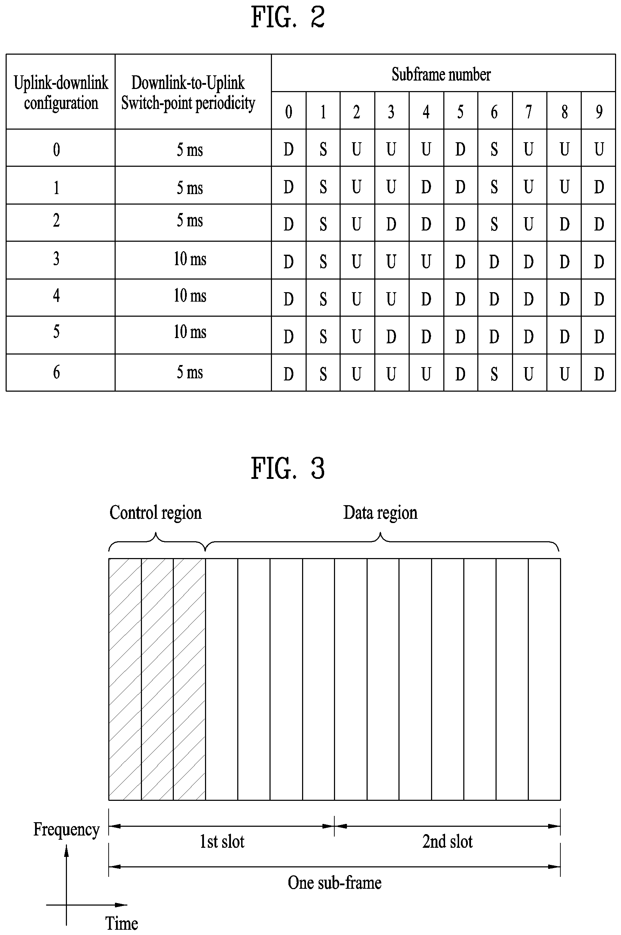

FIG. 2 illustrates exemplary frame configurations in the structure of the radio frame of FIG. 1.

In FIG. 2, D denotes a subframe for downlink transmission, U denotes a subframe for uplink transmission, and S denotes a special subframe for a guard time.

All UEs in each cell commonly have one frame configuration in the configurations of FIG. 2. That is, a frame configuration varies with a cell, the frame configuration may be called a cell-specific configuration.

FIG. 3 is a diagram illustrating the structure of a downlink subframe. Up to three OFDM symbols at the start of a first slot of one subframe corresponds to a control region to which a control channel is allocated. The remaining OFDM symbols correspond to a data region to which a Physical Downlink Shared Channel (PDSCH) is allocated. A basic transmission unit is one subframe. That is, a PDCCH and a PDSCH are allocated across two slots. Examples of the downlink control channels used in the 3GPP LTE system include, for example, a Physical Control Format Indicator Channel (PCFICH), a Physical Downlink Control Channel (PDCCH), a Physical Hybrid automatic repeat request Indicator Channel (PHICH), etc. The PCFICH is located in the first OFDM symbol of a subframe, carrying information about the number of OFDM symbols used for control channels in the subframe. The PHICH includes a HARQ ACKnowledgment/Negative ACKnowledgment (ACK/NACK) signal as a response to an uplink transmission. The control information transmitted on the PDCCH is referred to as Downlink Control Information (DCI). The DCI includes uplink or downlink scheduling information or an uplink transmit power control command for a certain UE group. The PDCCH may include information about resource allocation and transmission format of a Downlink Shared Channel (DL-SCH), resource allocation information of an Uplink Shared Channel (UL-SCH), paging information of a Paging Channel (PCH), system information on the DL-SCH, information about resource allocation of an higher layer control message such as a Random Access Response (RAR) transmitted on the PDSCH, a set of transmit power control commands for individual UEs in a certain UE group, transmit power control information, information about activation of Voice over IP (VoIP), etc. A plurality of PDCCHs may be transmitted in the control region. A UE may monitor the plurality of PDCCHs. The PDCCHs are transmitted on an aggregation of one or several contiguous Control Channel Elements (CCEs). A CCE is a logical allocation unit used to provide the PDCCHs at a coding rate based on the state of a radio channel. The CCE includes a set of REs. A format and the number of available bits for the PDCCH are determined based on the correlation between the number of CCEs and the coding rate provided by the CCEs. The BS determines a PDCCH format according to DCI to be transmitted to the UE, and attaches a Cyclic Redundancy Check (CRC) to control information. The CRC is masked by a Radio Network Temporary Identifier (RNTI) according to the owner or usage of the PDCCH. If the PDCCH is for a specific UE, the CRC may be masked by a cell-RNTI (C-RNTI) of the UE. If the PDCCH is for a paging message, the CRC may be masked by a paging indicator identifier (P-RNTI). If the PDCCH is for system information (more specifically, a System Information Block (SIB)), the CRC may be masked by a system information identifier and a System Information RNTI (SI-RNTI). To indicate a random access response to a random access preamble received from the UE, the CRC may be masked by a random access-RNTI (RA--RNTI).

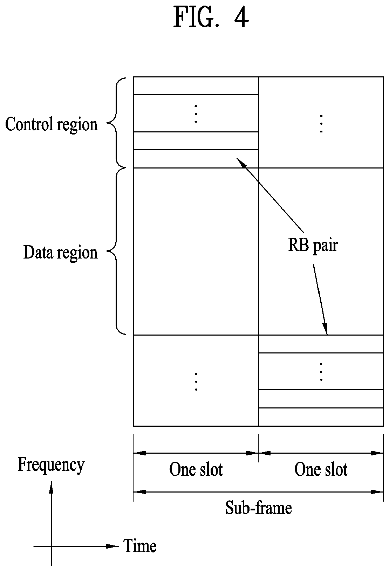

FIG. 4 is a diagram illustrating the structure of an uplink subframe. The uplink subframe may be divided into a control region and a data region in the frequency domain. A Physical Uplink Control Channel (PUCCH) including uplink control information is allocated to the control region. A Physical uplink Shared Channel (PUSCH) including user data is allocated to the data region. In order to maintain single carrier property, one UE does not simultaneously transmit the PUCCH and the PUSCH. A PUCCH for one UE is allocated to an RB pair in a subframe. The RBs of the RB pair occupy different subcarriers in two slots. Thus, the RB pair allocated to the PUCCH is "frequency-hopped" over a slot boundary..

Modeling of Multiple Input Multiple Output (MIMO) System

The MIMO system increases data transmission/reception efficiency using a plurality of Tx antennas and a plurality of Rx antennas. MIMO is an application of putting data segments received from a plurality of antennas into a whole message, without depending on a single antenna path to receive the whole message.

MIMO schemes are classified into spatial diversity and spatial multiplexing. Spatial diversity increases transmission reliability or a cell radius using diversity gain and thus is suitable for data transmission for a fast moving UE. In spatial multiplexing, multiple Tx antennas simultaneously transmit different data and thus high-speed data can be transmitted without increasing a system bandwidth.

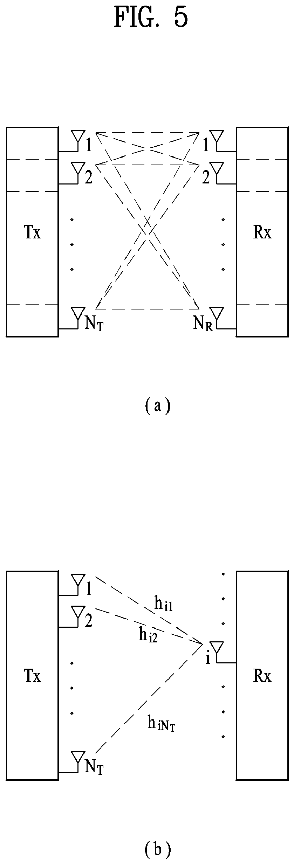

FIG. 5 illustrates the configuration of a wireless communication system supporting multiple antennas. Referring to FIG. 5(a), when the number of Transmission (Tx) antennas and the number of Reception (Rx) antennas are increased to NT and NR, respectively at both a transmitter and a receiver, a theoretical channel transmission capacity increases in proportion to the number of antennas, compared to use of a plurality of antennas at only one of the transmitter and the receiver. Therefore, transmission rate and frequency efficiency are remarkably increased. Along with the increase of channel transmission capacity, the transmission rate may be increased in theory to the product of a maximum transmission rate Ro that may be achieved in case of a single antenna and a rate increase rate Ri.

$$[\text{Equation 1}]$$

$$R_i = \min(N_T, N_R)$$

For instance, a MIMO communication system with four Tx antennas and four Rx antennas may achieve a four-fold increase in transmission rate theoretically, relative to a single-antenna wireless communication system. Since the theoretical capacity increase of the MIMO wireless communication system was proved in the mid 1990's, many techniques have been actively studied to increase data rate in real implementation. Some of the techniques have already been reflected in various wireless communication standards including standards for 3G mobile communications, future-generation Wireless Local Area Network (WLAN), etc.

Concerning the research trend of MIMO up to now, active studies are underway in many respects of MIMO, inclusive of studies of information theory related to calculation of multi-antenna communication capacity in diverse channel environments and multiple access environments, studies of measuring MIMO radio channels and MIMO modeling, studies of time-space signal processing techniques to increase transmission reliability and transmission rate, etc.

Communication in a MIMO system with NT Tx antennas and NR Rx antennas will be described in detail through mathematical modeling.

Regarding a transmission signal, up to NT pieces of information can be transmitted through the NT Tx antennas, as expressed as the following vector.

$$[\text{Equation 2}]$$

$$\mathbf{s} = \left[ s_1, s_2, \cdots, s_{N_T} \right]^T$$

A different transmission power may be applied to each piece of transmission information, $s_1, s_2, \cdots, s_{N_T}$. Let the transmit power levels of the transmission information be denoted by $P_1, P_2, \cdots, P_{N_T}$, respectively. Then the transmission power-controlled transmission information vector may be given as

$$[\text{Equation 3}]$$

$$\hat{\mathbf{s}} = \left[ \hat{s}_1, \hat{s}_2, \cdots, \hat{s}_{N_T} \right]^T = \left[ P_1 s_1, P_2 s_2, \cdots, P_{N_T} s_{N_T} \right]^T$$

The transmission power-controlled transmission information vector $\hat{\mathbf{s}}$ may be expressed as follows, using a diagonal matrix **P** of transmission power.

**【Equation 4】**

$$\hat{\mathbf{s}} = \begin{bmatrix} P_1 & & & 0 \\ & P_2 & & \\ & & \ddots & \\ 0 & & & P_{N_T} \end{bmatrix} \begin{bmatrix} s_1 \\ s_2 \\ \vdots \\ s_{N_T} \end{bmatrix} = \mathbf{Ps}$$

$N_T$ transmission signals $x_1$, $x_2$, $\cdots$, $x_{NT}$ may be generated by multiplying the transmission power-controlled information vector $\hat{\mathbf{s}}$ by a weight matrix **W**. The weight matrix **W** functions to appropriately distribute the transmission information to the Tx antennas according to transmission channel states, etc. These $N_T$ transmission signals $x_1$, $x_2$, ..., $x_{NT}$ are represented as a vector **x**, which may be determined as

**【Equation 5】**

$$\mathbf{x} = \begin{bmatrix} x_1 \\ x_2 \\ \vdots \\ x_i \\ \vdots \\ x_{N_T} \end{bmatrix} = \begin{bmatrix} W_{11} & W_{12} & \cdots & W_{1N_T} \\ W_{21} & W_{22} & \cdots & W_{2N_T} \\ \vdots & & \ddots & \\ W_{i1} & W_{i2} & \cdots & W_{iN_T} \\ \vdots & & \ddots & \\ W_{N_T1} & W_{N_T2} & \cdots & W_{N_TN_T} \end{bmatrix} \begin{bmatrix} \hat{s}_1 \\ \hat{s}_2 \\ \vdots \\ \hat{s}_j \\ \vdots \\ \hat{s}_{N_T} \end{bmatrix} = \mathbf{W\hat{s}} = \mathbf{WPs}$$

Here, $W_{ij}$ denotes a weight between a jth piece of information and an ith Tx antenna and **W** is a precoding matrix.

The transmitted signal x may be differently processed using according to two schemes (for example, spatial diversity and spatial multiplexing). In spatial multiplexing, different signals are multiplexed and transmitted to a receiver such that elements of information vector(s) have different values. In spatial diversity, the same signal is repeatedly transmitted through a plurality of channel paths such that elements of information vector(s) have the same value. Spatial multiplexing and spatial diversity may be used in combination. For example, the same signal may be transmitted through three Tx antennas in spatial diversity, while the remaining signals may be transmitted to the receiver in spatial multiplexing.

Given NR Rx antennas, signals received at the Rx antennas, $y_1$, $y_2$, $\cdots$, $y_{NR}$ may be represented as the following vector.

**【Equation 6】**

$$\mathbf{y} = \begin{bmatrix} y_1, y_2, \cdots, y_{N_R} \end{bmatrix}^{\mathrm{T}}$$

When channels are modeled in the MIMO wireless communication system, they may be distinguished according to the indexes of Tx and Rx antennas. A channel between a jth Tx antenna and an ith Rx antenna is denoted by hij. Notably, the index of an Rx antenna precedes the index of a Tx antenna in hij.

FIG. 5(b) illustrates channels from NT Tx antennas to an ith Rx antenna. The channels may be collectively represented as a vector or a matrix. Referring to FIG. 5(b), the channels from the NT Tx antennas to the ith Rx antenna may be expressed as

【Equation 7】

$$\mathbf{h}_i^T = \left[ h_{i1}, h_{i2}, \cdots, h_{iN_T} \right]$$

Hence, all channels from the $N_T$ Tx antennas to the $N_R$ Rx antennas may be expressed as the following matrix.

【Equation 8】

$$\mathbf{H} = \begin{bmatrix} \mathbf{h}_1^T \\ \mathbf{h}_2^T \\ \vdots \\ \mathbf{h}_i^T \\ \vdots \\ \mathbf{h}_{N_R}^T \end{bmatrix} = \begin{bmatrix} h_{11} & h_{12} & \cdots & h_{1N_T} \\ h_{21} & h_{22} & \cdots & h_{2N_T} \\ \vdots & & \ddots & \\ h_{i1} & h_{i2} & \cdots & h_{iN_T} \\ \vdots & & \ddots & \\ h_{N_R1} & h_{N_R2} & \cdots & h_{N_RN_T} \end{bmatrix}$$

Actual channels experience the above channel matrix H and then are added with Additive White Gaussian Noise (AWGN). The AWGN added to the NR Rx antennas is given as the following vector.

【Equation 9】

$$\mathbf{n} = \left[ n_1, n_2, \cdots, n_{N_R} \right]^T$$

From the above mathematical modeling, the received signal vector is given as
【Equation 10】

$$\mathbf{y} = \begin{bmatrix} y_1 \\ y_2 \\ \vdots \\ y_i \\ \vdots \\ y_{N_R} \end{bmatrix} = \begin{bmatrix} h_{11} & h_{12} & \cdots & h_{1N_T} \\ h_{21} & h_{22} & \cdots & h_{2N_T} \\ \vdots & & \ddots & \\ h_{i1} & h_{i2} & \cdots & h_{iN_T} \\ \vdots & & \ddots & \\ h_{N_R1} & h_{N_R2} & \cdots & h_{N_RN_T} \end{bmatrix} \begin{bmatrix} x_1 \\ x_2 \\ \vdots \\ x_j \\ \vdots \\ x_{N_T} \end{bmatrix} + \begin{bmatrix} n_1 \\ n_2 \\ \vdots \\ n_i \\ \vdots \\ n_{N_R} \end{bmatrix} = \mathbf{Hx} + \mathbf{n}$$

The numbers of rows and columns in the channel matrix H representing channel states are determined according to the numbers of Rx and Tx antennas. Specifically, the number of rows in the channel matrix H is equal to the number of Rx antennas, NR and the number of columns in the channel matrix H is equal to the number of Tx antennas, NT. Hence, the channel matrix H is of size NR×NT.
The rank of a matrix is defined as the smaller between the number of independent rows and the number of independent columns in the matrix. Accordingly, the rank of the matrix is not larger than the number of rows or columns of the matrix. The rank of the channel matrix H, rank(H) satisfies the following constraint.

【Equation 11】

$$rank(\mathbf{H}) \leq \min(N_T, N_R)$$

In MIMO transmission, the term "rank" denotes the number of paths for independently transmitting signals, and the term "number of layers" denotes the number of signal streams transmitted through respective paths. In general, since a transmitter transmits as many layers as the number of ranks used for signal transmission, the rank has the same meaning as the number of layers unless otherwise noted.

Reference Signals (RSs)

In a wireless communication system, a packet is transmitted on a radio channel. In view of the nature of the radio channel, the packet may be distorted during the transmission. To receive the signal successfully, a receiver should compensate for the distortion of the received signal using channel information. Generally, to enable the receiver to acquire the channel information, a transmitter transmits a signal known to both the transmitter and the receiver and the receiver acquires knowledge of channel information based on the distortion of the signal received on the radio channel. This signal is called a pilot signal or an RS.

In case of data transmission and reception through multiple antennas, knowledge of channel states between Tx antennas and Rx antennas is required for successful signal reception. Accordingly, an RS should exist for each Tx antenna.

In a mobile communication system, RSs are largely categorized into two types according to the purposes that they serve, RSs used for acquisition of channel information and RSs used for data demodulation. The former-type RSs should be transmitted in a wideband to enable UEs to acquire downlink channel information. Even UEs that do not receive downlink data in a specific subframe should be able to receive such RSs and measure them. When an eNB transmits downlink data, it transmits the latter-type RSs in resources allocated to the downlink data. A UE can perform channel estimation by receiving the RSs and thus demodulate data based on the channel estimation. These RSs should be transmitted in a data transmission region.

In the legacy 3GPP LTE system (e.g. one conforming to 3GPP LTE Release-8), two types of downlink RSs are defined for unicast service, Common RS (CRS) and Dedicated RS (DRS). CRS is used for CSI acquisition and measurement, for example, for handover. The CRS is also called a cell-specific RS. DRS is used for data demodulation, called a UE-specific RS. The legacy 3GPP LTE system uses the DRS only for data demodulation and the CRS for the two purposes of channel information acquisition and data demodulation.

CRSs, which are cell-specific, are transmitted across a wideband in every subframe. According to the number of Tx antennas at an eNB, the eNB may transmit CRSs for up to four antenna ports. For instance, an eNB with two Tx antennas transmits CRSs for antenna port 0 and antenna port 1. If the eNB has four Tx antennas, it transmits CRSs for respective four Tx antenna ports, antenna port 0 to antenna port 3.

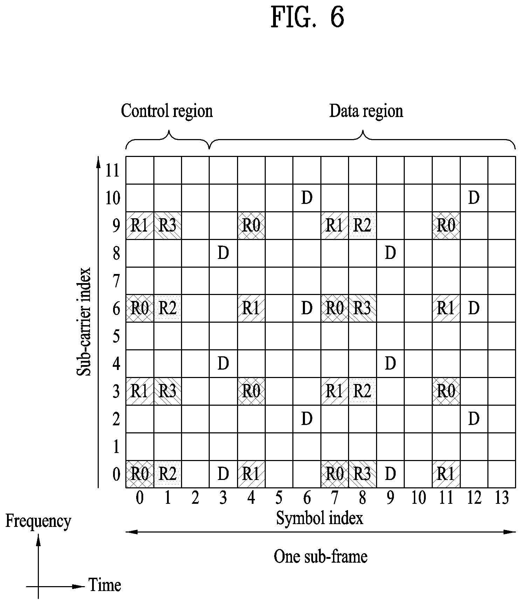

FIG. 6 illustrates a CRS and DRS pattern for an RB (including 14 OFDM symbols in time by 12 subcarriers in frequency in case of a normal CP) in a system where an eNB has four Tx antennas. In FIG. 6, REs labeled with 'R0', 'R1', 'R2' and 'R3' represent the positions of CRSs for antenna port 0 to antenna port 4, respectively. REs labeled with 'D' represent the positions of DRSs defined in the LTE system.

The LTE-A system, an evolution of the LTE system, can support up to eight Tx antennas. Therefore, it should also support RSs for up to eight Tx antennas. Because downlink RSs are defined only for up to four Tx antennas in the LTE system, RSs should be additionally defined for five to eight Tx antenna ports, when an eNB has five to eight downlink Tx antennas in the LTE-A system. Both RSs for channel measurement and RSs for data demodulation should be considered for up to eight Tx antenna ports.

One of significant considerations for design of the LTE-A system is backward compatibility. Backward compatibility is a feature that guarantees a legacy LTE terminal to operate normally even in the LTE-A system. If RSs for up to eight Tx antenna ports are added to a time-frequency area in which CRSs defined by the LTE standard are transmitted across a total frequency band in every subframe, RS overhead becomes huge. Therefore, new RSs should be designed for up to eight antenna ports in such a manner that RS overhead is reduced.

Largely, new two types of RSs are introduced to the LTE-A system. One type is CSI-RS serving the purpose of channel measurement for selection of a transmission rank, a Modulation and Coding Scheme (MCS), a Precoding Matrix Index (PMI), etc. The other type is Demodulation RS (DM RS) for demodulation of data transmitted through up to eight Tx antennas.

Compared to the CRS used for both purposes of measurement such as channel measurement and measurement for handover and data demodulation in the legacy LTE system, the CSI-RS is designed mainly for channel estimation, although it may also be used for measurement for handover. Since CSI-RSs are transmitted only for the purpose of acquisition of channel information, they may not be transmitted in every subframe, unlike CRSs in the legacy LTE system. Accordingly, CSI-RSs may be configured so as to be transmitted intermittently (e.g. periodically) along the time axis, for reduction of CSI-RS overhead.

When data is transmitted in a downlink subframe, DM RSs are also transmitted dedicatedly to a UE for which the data transmission is scheduled. Thus, DM RSs dedicated to a particular UE may be designed such that they are transmitted only in a resource area scheduled for the particular UE, that is, only in a time-frequency area carrying data for the particular UE.

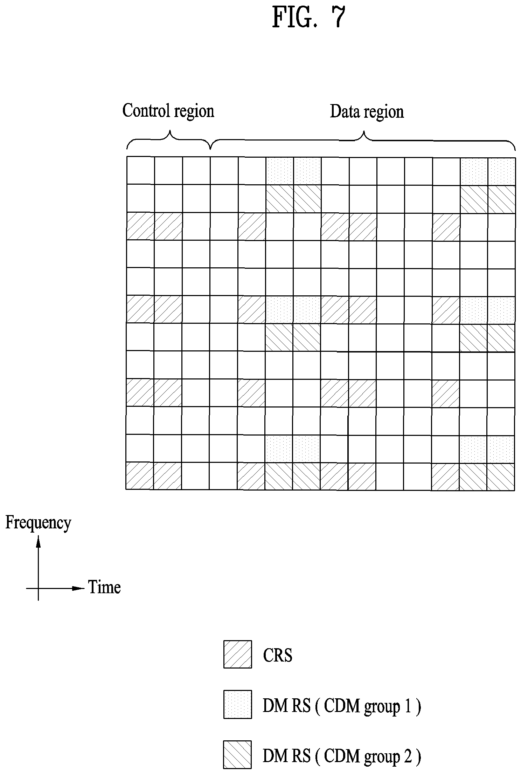

FIG. 7 illustrates an exemplary DM RS pattern defined for the LTE-A system. In FIG. 7, the positions of REs carrying DM RSs in an RB carrying downlink data (an RB having 14 OFDM symbols in time by 12 subcarriers in frequency in case of a normal CP) are marked. DM RSs may be transmitted for additionally defined four antenna ports, antenna port 7 to antenna port 10 in the LTE-A system. DM RSs for different antenna ports may be identified by their different frequency resources (subcarriers) and/or different time resources (OFDM symbols). This means that the DM RSs may be multiplexed in Frequency Division Multiplexing (FDM) and/or Time Division Multiplexing (TDM). If DM RSs for different antenna ports are positioned in the same time-frequency resources, they may be identified by their different orthogonal codes. That is, these DM RSs may be multiplexed in Code Division Multiplexing (CDM). In the illustrated case of FIG. 7, DM RSs for antenna port 7 and antenna port 8 may be located on REs of DM RS CDM group 1 through multiplexing based on orthogonal codes. Similarly, DM RSs for antenna port 9 and antenna port 10 may be located on REs of DM RS CDM group 2 through multiplexing based on orthogonal codes.

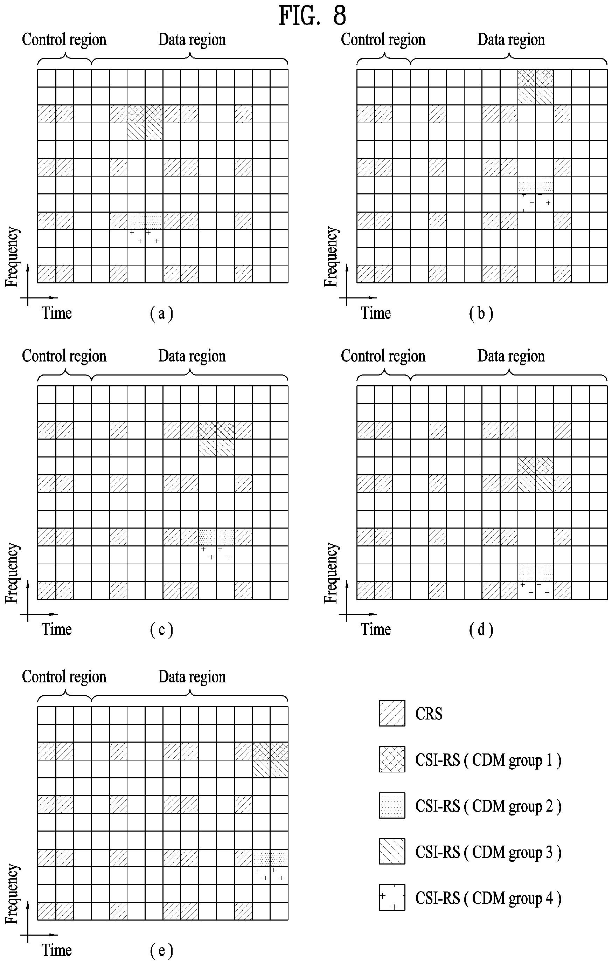

FIG. 8 illustrates exemplary CSI-RS patterns defined for the LTE-A system. In FIG. 8, the positions of REs carrying CSI-RSs in an RB carrying downlink data (an RB having 14 OFDM symbols in time by 12 subcarriers in frequency in case of a normal CP) are marked. One of the CSI-RS patterns illustrated in FIGS. 8(a) to 8(e) is available for any downlink subframe. CSI-RSs may be transmitted for eight antenna ports supported by the LTE-A system, antenna port 15 to antenna port 22. CSI-RSs for different antenna ports may be identified by their different frequency resources (subcarriers) and/or different time resources (OFDM symbols). This means that the CSI-RSs may be multiplexed in FDM and/or TDM. CSI-RSs positioned in the same time-frequency resources for different antenna ports may be identified by their different orthogonal codes. That is, these DM RSs may be multiplexed in CDM. In the illustrated case of FIG. 8(a), CSI-RSs for antenna port 15 and antenna port 16 may be located on REs of CSI-RS CDM group 1 through multiplexing based on orthogonal codes. CSI-RSs for antenna port 17 and antenna port 18 may be located on REs of CSI-RS CDM group 2 through multiplexing based on orthogonal codes. CSI-RSs for antenna port 19 and antenna port 20 may be located on REs of CSI-RS CDM group 3 through multiplexing based on orthogonal codes. CSI-RSs for antenna port 21 and antenna port 22 may be located on REs of CSI-RS CDM group 4 through multiplexing based on orthogonal codes. The same principle described with reference to FIG. 8(a) is applicable to the CSI-RS patterns illustrated in FIGS. 8(b) to 8(e).

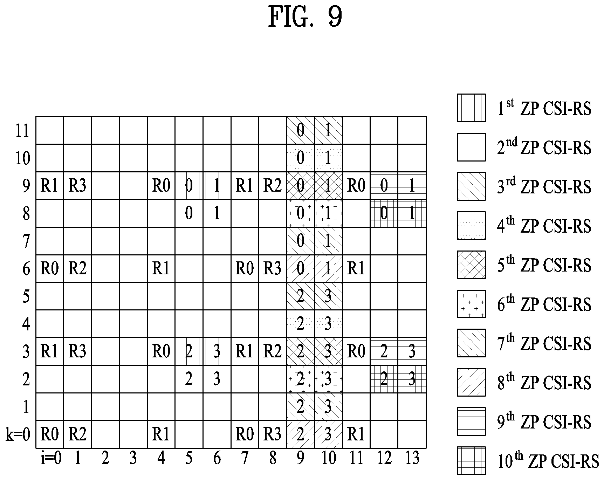

FIG. 9 is a diagram illustrating an exemplary Zero-Power (ZP) CSI-RS pattern defined in an LTE-A system. A ZP CSI-RS is largely used for two purposes. First, the ZP CSI-RS is used to improve CSI-RS performance. That is, one network may mute a CSI-RS RE of another network in order to improve CSI-RS measurement performance of the other network and inform a UE thereof of the muted RE by setting the muted RE to a ZP CSI-RS so that the UE may correctly perform rate matching. Second, the ZP CSI-RS is used for interference measurement for CoMP CQI calculation. That is, some networks may mute a ZP CRS-RS RE and a UE may calculate a CoMP CQI by measuring interference from the ZP CSI-RS.

The RS patterns of FIGS. 6 to 9 are purely exemplary and an RS pattern applied to various embodiments of the present invention is not limited to such specific RS patterns. In other words, even when an RS pattern different from the RS patterns of FIGS. 6 to 9 is defined and used, various embodiments of the present invention may be identically applied.

**Full Duplex Radio (FDR) Transmission**

A system supporting FDR refers to a system capable of simultaneously supporting transmission and reception using the same resource in a transmission device. For example, an eNB or a UE supporting FDR transmission may perform transmission without performing uplink/downlink duplexing in frequency/time, etc.

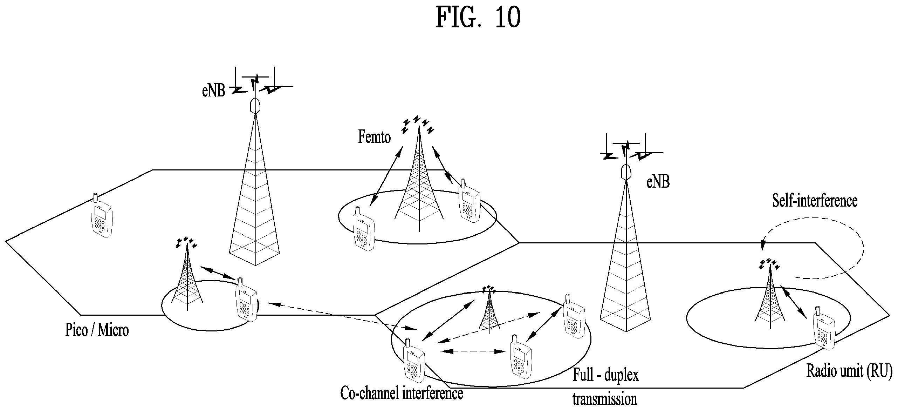

FIG. 10 illustrates an exemplary system supporting FDR transmission.

Referring to FIG. 10, two types of interference exist in the FDR system.

The first is intra-device interference indicating that a signal transmitted over a transmission antenna of an FDR device acts as interference by being received by a reception antenna of the FDR device. Generally, a self-interference signal is received with higher power than a desired signal. Therefore, it is important to completely cancel intra-device interference through an interference cancellation operation.

The second is inter-device interference in which an uplink signal transmitted by an eNB or a UE acts as interference by being received by an adjacent eNB or UE.

In a legacy communication system, since half duplex (e.g., FDD or TDD) in which uplink/downlink transmission is separately performed in frequency or time is implemented, no interference occurs between uplink and downlink. However, an FDR transmission environment in which uplink and downlink share the same frequency/time resource may cause interference between an FDR device and an adjacent device.

Although interference between adjacent cells in the legacy communication system still occurs even in the FDR system, this will not be covered in the present invention.

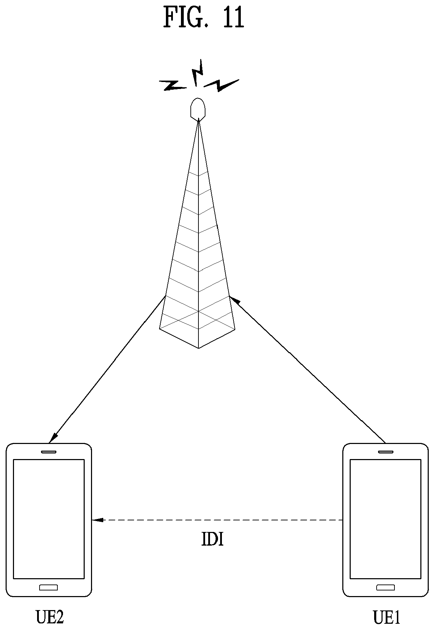

FIG. 11 illustrates exemplary inter-device interference.

As described above, Inter-Device Interference (IDI) occurs only in FDR transmission using the same resource in a cell. Referring to FIG. 11, an uplink signal transmitted by UE 1 to an eNB may act as interference with respect to UE 2. While two UEs are simply illustrated in FIG. 11 for convenience of description of IDI, features of the present invention are not limited to the number of UEs.

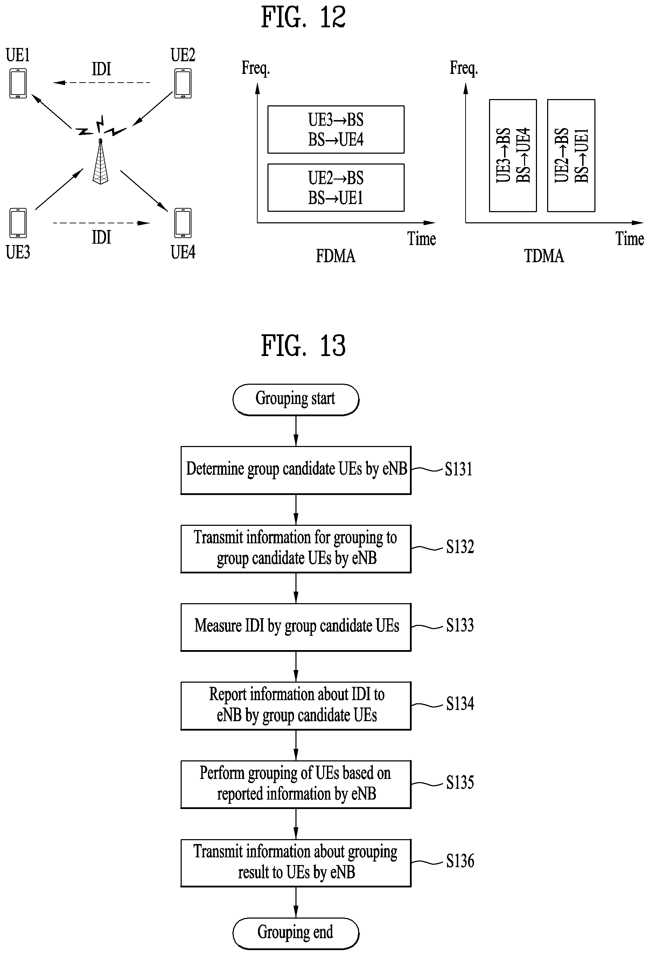

FIG. 12 illustrates an exemplary FDMA and TDMA operation when an eNB operates in a Full Duplex (FD) mode on the same resource and UEs perform multiple access.

In an FDR system, there may be FD that does not use the same resource as well as FD that uses the same resource.

Referring to FIG. 12, a total of two groups performing an FD operation on the same resource may be configured. One is a group including UE1 and UE2 and the other is a group including UE3 and UE4. Since IDI occurs in each group using the same resource, it is desirable that UEs generating less IDI be configured as a group.

For example, if interference caused by UE2 has a greater effect on UE4 than on UE1, UE1 and UE2 may be configured as one group as illustrated in FIG. 2.

Meanwhile, if excessive IDI caused by UE2 affects UE1, UE2 and UE1 may be configured not to use the same resource. For example, in FDMA, a total of three frequency bands may be allocated so that a group of UE3 and UE4 uses the same frequency region and UE1 and UE2 use different frequency regions. In this case, while resource consumption increases, more efficient transmission can be performed in terms of overall performance, for example, throughput.

Although technology for grouping UEs among a plurality of UEs for an FD operation on the same resource is needed, there has been no method capable of implementing this technology.

Similar technology for measuring inter-cell interference or selecting a cell according to interference has been used in the field of Coordinated Multi-Point (CoMP). In CoMP, a UE located at a boundary between cells determines an eNB by measuring interference of neighbor cells. However, interference in this case means signals of multiple cells affecting one UE and, since the UE does not share resources between UEs, the UE does not consider IDI of neighbor UEs.

As another technology, a multi-user MIMO or virtual MIMO method configures a virtual MIMO system with an eNB having a plurality of antennas by grouping UEs each having one antenna. In multi-user MIMO, UEs receive downlink transmission information of other UEs while downlink transmission is performed so that IDI occurs. In this case, an eNB performs scheduling on UEs, channels between the UEs and the eNB having an orthogonal relationship, in order to avoid IDI. On the other hand, the present invention relates to IDI in FD in which downlink transmission and uplink transmission as well as downlink transmission are simultaneously performed.

The present invention describes a method of determining a group of UEs for IDI avoidance or mitigation and measuring and reporting IDI using the group of the UEs in a system using FD communication on the same resource.

In the present invention, a device (e.g., an eNB or a UE) supporting an FD mode on the same resource is referred to as an FDR device, eNB, or UE.

The FDR device may include a self-interference canceller and the FDR device including the self-interference canceller may operate/support the FD mode on the same resource. The FDR device that does not include the self-interference canceller cannot operate in the FD mode on the same resource but may support the FD mode so as to perform information exchange with the FDR device operating in the FD mode on the same resource. That is, the FDR device that does not include the self-interference canceller is capable of supporting the FD mode. That is, even the FDR device that does not include the self-interference canceller may perform IDI measurement and reporting. In FIG. 11, the eNB corresponds to an FDR device including the self-interference canceller and UE1 and UE2 correspond to FDR devices that do not include the self-interference canceller.

In the present invention, grouping refers to grouping a plurality of UEs based on a specific criterion.

The present invention is based on a method of configuring a group by an eNB based on IDI Information that a UE reports. If the eNB is an entity for configuring the group, this method may be referred to as eNB centric grouping.

Hereinafter, a situation in which the eNB performs an FD mode operation on the same resource will be described as a representative example. However, the present invention is applicable to a situation in which the UE performs the FD mode operation on the same resource and a situation in which the UE performs the FD mode operation on the same resource when there is no relaying by the eNB as in Device-To-Device communication (D2D). A description thereof will be given after the situation in which the eNB performs the FD mode operation on the same resource is described. The above situations may be simultaneously generated in a cell and may be simultaneously applied although they are separately described for ease of description in the present invention.

1. First Embodiment

The first embodiment of the present invention relates to a method of initially configuring a group sharing the same resource in a situation in which an FD operation can be performed on the same resource.

FIG. 13 is a flowchart illustrating an initial grouping configuration method according to a first embodiment of the present invention.

Initial grouping indicates grouping for applying an FD mode on the same resource in a cell for the first time.

An initial grouping procedure will now be described in brief. First, an eNB determines UEs that desire to participate in grouping (S131). In this case, the eNB may select candidate UEs in consideration of capability to manage the FD mode on the same resource. If the candidate UEs are selected, the eNB transmits information or an instruction necessary for grouping to the candidate UEs (S132). The candidate UEs measure IDI (S133) and report information about IDI to the eNB (S134). The eNB groups UEs based on the reported information (S135) and transmits information about a grouping result to the corresponding UEs (S136).

Hereinafter, each step of FIG. 13 will be described in detail.


1.1 Determination of candidate UEs


In step S131, the eNB monitors candidate UEs that are to be configured as a group.

As a first method of determining the candidate UEs, the eNB may request that all UEs connected to the eNB transmit information as to whether the UEs participate in grouping. For example, the information about request may be transmitted through a DCI format of a PDCCH or an E-PDCCH or through a PDSCH. In response to the request, the UEs may transmit a response indicating whether to participate in grouping. For example, the response may be transmitted through an Uplink Control Information (UCI) format of a PUCCH or a PUSCH.

As a second method, each UE may transmit participation request information. That is, the UE may transmit the information indicating request for participating in the FD mode on the same resource in consideration of characteristics of data that the UE is to transmit. Such information may be transmitted to the eNB through the UCI format of the PUCCH or the PUSCH.

A third method relates to the case in which the eNB is pre-aware of information about a UE, for example, the case in which the eNB is aware of characteristics of data that the UE is to transmit or of a preferred UE for FD participation on the same resource. For example, the third method may correspond to the case in which a UE is ready to participate in grouping but does not currently participate in the FD mode on the same resource. In this case, the eNB may transmit information indicating whether a UE is to participate in grouping to the corresponding UE. Such information may be transmitted through the DCI format of the PDCCH or the E-PDCCH or through the PDSCH.

In this case, the information indicating whether a UE is to participate in grouping may include information about an indication as to whether the UE is an FDR device (including a self-interference canceller) capable of operating in the FD mode on the same resource, information about an indication as to whether the UE is an FDR devices supporting the FD mode on the same resource although the UE cannot operate in the FD mode on the same resource, and information about an indication as to whether the UE is an FDR device and is to request participation in grouping. As described above, an FDR device may include a self-interference canceller and the FDR device including the self-interference canceller may operate/support the FD mode on the same resource. An FDR device that does not include the self-interference canceller cannot operate in the FD mode on the same resource but can support the FD mode so as to perform information exchange with the FDR device operating in the FD mode on the same resource. That is, even the FDR device that does not include the self-interference canceller may a support operation such as IDI measurement and reporting.

Such three types of information may be allocated through the UCI format. For example, a total of three bits is allocated through the UCI format to the above three indications, one bit per indication. Each bit indicates "1" for acknowledgement and "0" for negative acknowledgement or vice versa.

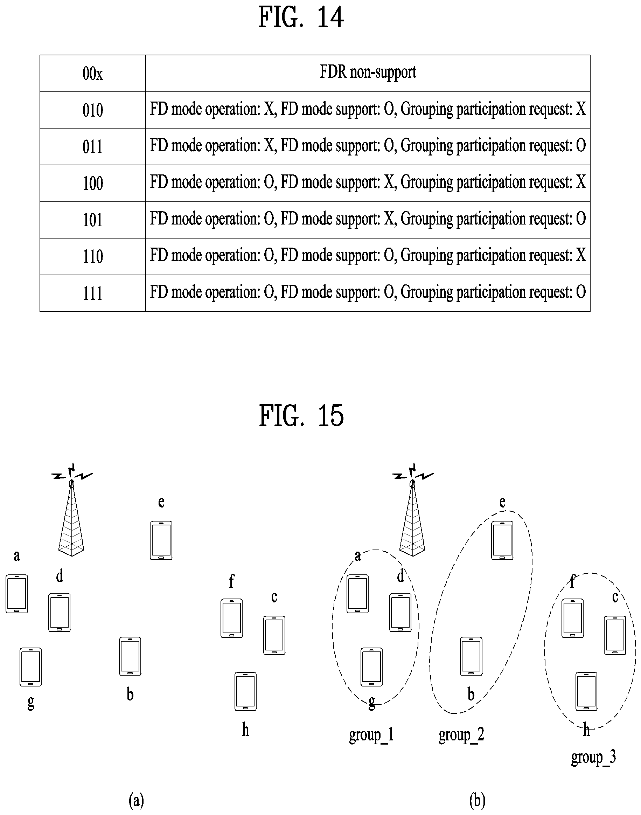

FIG. 14 illustrates exemplary allocation of a bit indicating whether to participate in grouping.

For example, '011' indicates that a UE cannot operate in the FD mode on the same resource but supports the FD mode on the same resource and currently desires to participate in grouping, as in the UEs of FIG. 11. '000' may be allocated to a UE that does not participate in grouping so as to support operation in a legacy system.

An FDR device may change a grouping participation request bit in consideration of a transmission data characteristic, a remaining power profile, a buffer state, etc. In addition, in order to reduce time to determine a bit allocated to a UE by an eNB, the grouping participation request bit may be set so as not to perform an FD mode operation and FD mode support.

A Bit for FD mode operation and support may be desirably transmitted only when a UE participates in grouping for the first time or participates in grouping again after the UE is excluded from a group after group configuration. If group configuration is ended, the eNB may manage the bit together with corresponding UE_ID by setting a UE capable of performing only FD mode support to '0' and a UE capable of performing an FD mode operation to '1'.

A UE capable of performing the FD mode operation may additionally allocate a bit indicating an operation method in the FD mode through the UCI format. For example, the operation method may be indicated such that if the bit is '0', this indicates FD mode support and, if the bit is '1', this indicates the FD mode operation. The eNB may determine the bit for the case in which the UE operates in the FD mode so as to be used for resource allocation.

1.2 Information transmission for grouping

Next, in step S132, the eNB transmits information for grouping to candidate UEs selected based on S131.

An example of information for grouping may include an indication as to whether a corresponding UE has been selected as a candidate UE, a frequency to be identically used, and the total number N of grouping candidate UEs. The eNB may transmit the information for grouping by allocating a bit through the DCI format of the PDCCH or through the PDSCH.

The eNB may limit operation UEs due to the number of available UEs. In addition, the eNB may inform a UE that has indicated that the UE can participate in grouping in step S131 of whether the UE has been selected as a grouping candidate UE. In this case, a UE that has not been selected as a candidate UE by the eNB desirably operates in a fallback mode. The fallback mode indicates operation in half duplex as in a legacy scheme or in the FD mode on different frequencies.

1.3 IDI Measurement

Next, in step S133, a grouping candidate UE measures IDI caused by (N-1) neighbor UEs except IDI caused thereby. Measurement of IDI caused by the neighbor UEs may be performed as follows.

IDI is generated by use of the same resource. One UE may transmit an uplink UL signal and the other (N-1) UEs may receive a downlink signal in each subframe during a total of N subframes, thereby measuring Reference Signal Received Power (RSRP) or Reference Signal Received Quality (RSRQ) of IDI.

The magnitude of IDI with respect to each target UE may be defined as a function having parameters of the distance between a measurement UE and the target UE, transmission power of the target UE, and transmission direction of the target UE.

Meanwhile, all of N UEs included in grouping candidates may be measurement subject UEs. In this case, a signature for distinguishing between the UEs may be used.

1.4 IDI Information Reporting

Next, in step S134, N UEs may transmit UE_IDs or indexes and information about the measured IDI to the eNB. The information about the measured IDI may be transmitted using the following methods.

A first method is to transmit approximate IDI Information. Each UE may arrange IDI values measured with respect to neighboring UEs in ascending order or descending order and transmit an arranged order (index value) and UE_IDs of the corresponding neighbor UEs to the eNB through the UCI format of the PUCCH or the PUSCH. According to the first method, transmission amount can be reduced by transmitting the arranged order as compared with a method of transmitting detailed information.

A second method is to transmit detailed information. Each UE may transmit UE_IDs of the neighboring UEs and quantized information about the measured IDI values corresponding to the UE_IDs to the eNB through the UCI format of the PUCCH or the PUSCH.

A third method may use a hybrid form of the first and second methods at the request of the eNB. For example, each UE may transmit the arranged order and UE_ID as in the first method and simultaneously transmit the quantized information for partial UE_IDs as in the second method. In addition, for all UE_IDs, the information of the second method may be transmitted in a long-term period and the information of the first method may be transmitted in a short-term period.

In step S134, not only the information about IDI but also additional information to be considered for grouping may be transmitted.

For example, quantized information about IDI processing capabilities of a UE may be transmitted (through the UCI format of the PUCCH or the PUSCH). Alternatively, the best frequency band based on a CSI channel fed back by the UE, a remaining power profile of the UE, etc. may be transmitted (through the UCI format of the PUCCH or the PUSCH).

1.5 Grouping implementation

Next, in step S135, the eNB performs grouping based on the information received in step S134 and sets a group ID of each UE.

Grouping may be performed based on the magnitude of IDI or an order arranged by the magnitude of IDI. Upon additionally receiving information other than the IDI measurement values, the eNB may perform grouping using the additional information.

The eNB may configure a group considering a specific threshold of IDI of each UE or the size of each preconfigured group. In this case, the threshold may be determined according to capabilities of an IDI mitigation or cancellation algorithm.

The size of each group (the number of UEs included in each group) may be predetermined in consideration of available resources. Alternatively, the size of a group may be set by configuring the group only when an IDI value is equal to or greater/less than a specific threshold. A minimum size of a group is 1 and this indicates that an IDI value significantly deviates from the threshold and that a specific resource is allocated only to the corresponding UE. That is, this case corresponds to a fallback mode operation.

As a first method of IDI based grouping by the eNB, a group of UEs generating much IDI may be configured. For example, a group of UEs having IDI values equal to or greater than the specific threshold may be configured. Such grouping may be defined as worst relation based grouping. That is, UEs having significant IDI are configured as one group.

As a second method of IDI based grouping by the eNB, a group of UEs generating less IDI may be configured. For example, a group of UEs having IDI values equal to or less than the specific threshold may be configured. Such grouping may be defined as best relation based grouping. That is, UEs having less IDI may be configured as one group.

According to a group configured by the above two methods, resource allocation in the group may be performed as follows.

In a worst relation based group, since IDI values of UEs in the group are greater than the threshold, an IDI avoidance technique (e.g., a beamforming technique) may be used when the UEs in the group use the same resource. In addition, interference may be avoided by multiplexing the UEs in the group based on FDM and UEs between groups may be configured to operate in/support an FD mode on the same resource. Operation/support of the FD mode on the same resource by UEs between groups favorably uses a Successive Cancellation (SC) method which is an interference cancellation technique. This is because the SC method shows better cancellation performance as the difference in signal strength of interference is big.

In a best relation based group, UEs in a group are configured to operate in/support the FD mode on the same resource and UEs between groups may be multiplexed based on FDM, thereby avoiding interference.

The FD mode may be performed on the same resource between the worst relation based group and the best relation based group. In this case, the SC method as an interference cancellation technique is favorably applied. As described above, the SC method exhibits better performance as the difference in signal strength of interference is big. For example, if a first UE, a second UE included in the worst relation based group with respect to the first UE, and a third UE included in a best relation based group with respect to the first UE are selected by the eNB and the three UEs support the FD mode on the same resource, the SC method may be sequentially applied to the second UE in the worst relation based group and the third UE in the best relation based group. Then, performance increases relative to the case in which only UEs in the same relation group are selected.

## 1.5.1 Example of worst relation based grouping

FIG. 15 (a) illustrates exemplary arrangement of an eNB and 8 UEs for cell-specific grouping and FIG. 15(b) illustrates exemplary group configuration when worst relation based grouping is ended. In this case, it is assumed that IDI is proportional to the distance between UEs.

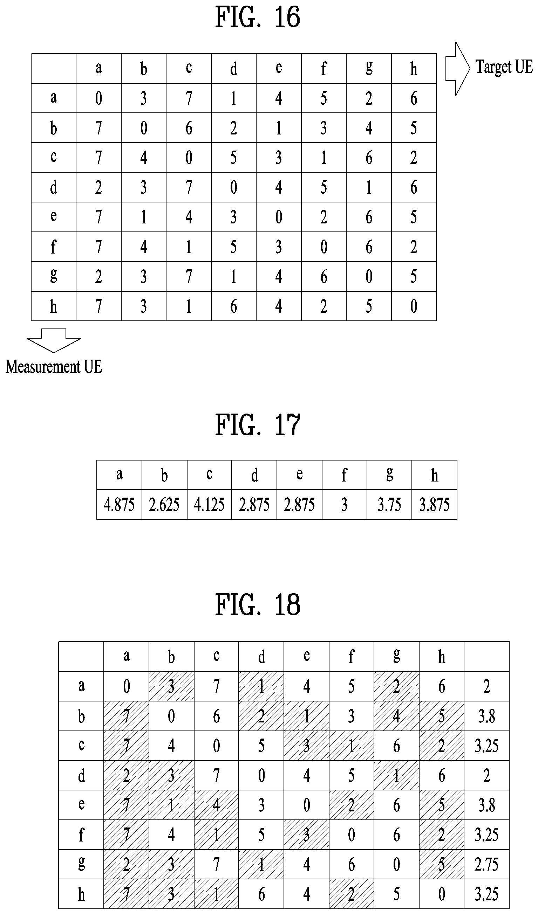

FIG. 16 illustrates arrangement based on IDI measured by the UEs of FIG. 15(a) in order of a high value. In FIG. 16, the first column indicates UEs that desire to measure IDI and the first row indicates target UEs, IDI of which is to be measured.

For example, the second row of FIG. 16 indicates that measured IDI has a high value in order of d, g, b, e, f, h, and c when UE a measures IDI of the other UEs. This method corresponds to the first method of the IDI information reporting method of section 1.4. Specifically, a low index is used for a high IDI value. Hereinafter, grouping will be performed based on the assumption that a high IDI value has a low index. However, grouping may be performed based on the assumption that a high IDI value has a high index value.

When a measurement UE is identical to a target UE, since IDI is not measured and this is meaningless, IDI is indicated by '0'.

Averages of values in the columns of FIG. 16 are shown in FIG. 17. An average of the values in each column may relatively indicate how much a measurement UE is separated from the center of all UEs.

Hereinafter, a detailed procedure will be described of grouping UEs as illustrated in FIG. 15(b) by performing worst relation based grouping based on the measurement values of FIG. 16 in arrangement of the eNB and the UEs of FIG. 15(a).

FIG. 18 illustrates selection of UEs for configuring a first group.

Since a low number (low index) in a table indicates that a target UE has a great effect (of IDI) on a measurement UE, an eNB selects target UEs having a great effect on each measurement UE. In an example of FIG. 18, three values having a great effect on each measurement UE (three low values) in each column are selected. In this case, the three values are arbitrarily selected and the number of selected values may differ according to the total number of groups. In addition, when index values are equal, all of the same index values are selected. However, the present invention is not limited thereto.

For example, in the first column of FIG. 18, '2' corresponding to the lowest value is selected. When expressing '2' as (row-column), two '2's in (d-a) and (g-a) are selected. Since it has been determined that the three values having a great effect are selected, the next value '7' is selected and all of the same values are selected. As a result, all values are selected in the first column.

The second column of FIG. 18 will now be described. The lowest value in the second column is '1' and one '1' in (e-b) is selected. The next lowest value is '3' and '3's in (a-b), (d-b), (g-b), and (h-b) are selected.

Referring to the third column of FIG. 18, the lowest value in the third column is '1', two '1's in (f-c) and (h-c) are selected. The next lowest value is '4' and one '4' in (e-c) is selected. Consequently, three values are selected in total.

In this way, low values in the other columns are selected and the selected values are shaded in the table of FIG. 18.

Next, an average of values in each row with respect to a selected target UE is calculated. The rightmost column of FIG. 18 indicates a corresponding average. A low average may mean that there is a small number of target UEs having an effect on a measurement UE, because three target UEs having low values have been selected. In addition, a low average may also mean that a measurement UE is biased toward one side. In the example of FIG. 15(a), it may be appreciated that averages of UEs a, d, and g biased toward one side are low. On the contrary, a high average may mean that a UE is greatly affected by many UEs.

Accordingly, if the size of the first group is determined as 3, UEs a, d, and g having the three lowest averages are set as the first group.

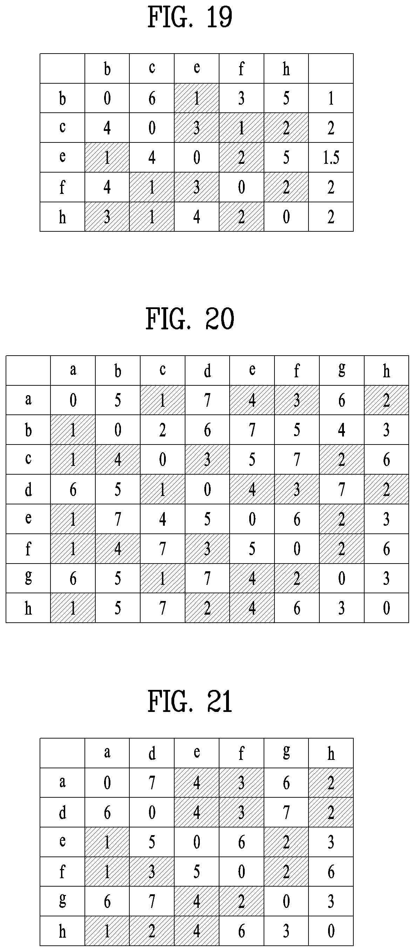

FIG. 19 illustrates selection of target UEs as in FIG. 18 with respect to the other UEs except for UEs a, d, and g configured as a group.

For example, the lowest value '1' in the first column is selected and the next lowest value '3' is selected. In the third column for example, the lowest value '1' is selected and the next lowest value '3' is selected. The same values are all selected. In this way, values in each column are selected.

Next, as in FIG. 18, an average of values of each row is calculated with respect to a selected target UE. The rightmost column of FIG. 19 indicates a corresponding average. A low average means that there is a small number of UEs having an effect on a measurement UE. Therefore, when the size of a second group is 2, UEs b and e having the two lowest average values are configured as the second group.

Grouping may be performed by repeating the above method with respect to the other UEs. In the embodiment of FIG. 15, a total of three groups is exemplarily configured.

As described above, worst relation based grouping has been described in section 1.5.1 based on the assumption that a high IDI value has a low index. However, worst relation based grouping may be performed based on the assumption that a high IDI value has a high index. In this case, in FIG. 16, a predetermined number of high indexes may be selected and the above method may be identically applied based on a high average value of each row.

### 1.5.2 Example of best relation based grouping

FIG. 20 illustrates configuration of a first best relation based group when IDI is arranged in order of a low value contrary to FIG. 16. That is, '1' in FIG. 16 becomes '7', '2' in FIG. 16 becomes '6', and '7' in FIG. 16 becomes '1'. This method corresponds to the first method in the IDI information reporting method of section 1.4 and, specifically, a low IDI value is set to have a low index. Hereinafter, grouping will be performed based on the assumption that a low IDI value has a low index. However, grouping may be performed based on the assumption that a low IDI value has a high index.

A low value in a table indicates that a target UE has a less effect on a measurement UE.

First, a target UE having less effect on a measurement UE (having a low value) is selected. In the example of FIG. 20, the size of each group is set to 2 and two low values are selected in each column. The size of a group and selected values, set to 2, are arbitrarily determined and may vary with the total number of groups. In addition, while all of the same values are selected when the same values are present, the present invention is not limited thereto. Since the highest IDI value should satisfy a value equal to or less than a threshold value in best relation based grouping, target UEs may be not selected according to the threshold value. If the target UEs are not selected, different frequencies/times may be allocated to the UEs. Hereinafter, the case in which an IDI measurement value is equal or less than the threshold value will be described as an embodiment.

Since a low value is assigned based on a low IDI value and two low values are selected, a large number of UEs selected in each column indicates that a target UE is separated from measurement UEs by a long distance. For example, a target UE a has 5 selection values and it may be appreciated in FIG. 15(a) that the target UE a is located at an end side.

For best relation based grouping, UEs which are small in number selected in each column and have a greatest effect on IDI are selected so as to reduce the number of UEs having a greatest effect on IDI. For example, UEs having a small number of selected values in respective columns are b and h and the number of selected values in each column is 2. A UE having a greatest effect on IDI indicates that the UE has a large value. A value selected in a column of the UE b is 4, which is greater than 2 selected in a column of the UE h. Therefore, the UE b is selected. That is, in FIG. 20, a measurement UE c or f may be configured as a group with respect to the target UE b.

FIG. 21 illustrates selection of target UEs as in FIG. 20 except for UEs b and c to configure a second group after the UEs b and c are configured as a group.

When the same method as first grouping is used, among UEs d, g, and h having a lower number of values selected in each column, the UE d having the greatest value 3 is selected. In a column of the UE d, a UE f has a large value as 3. Therefore, the UEs d and f are configured as one group.

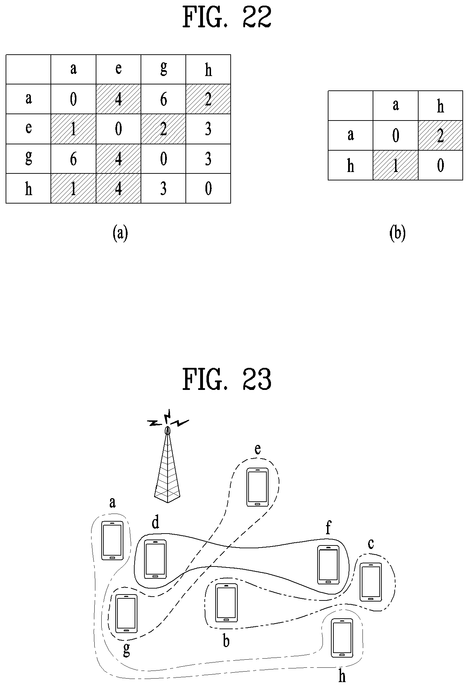

Similarly, FIG. 22(a) and FIG. 22(b) illustrate selection of target UEs for configuring a third group and a fourth group, respectively. Then, UEs g and e are configured as a group in FIG. 22(a) and UEs a and h are configured as a group in FIG. 22(b).

That is, best relation based grouping in FIG. 15(a) may be configured as in FIG. 23. That is, each of UEs b and c, UEs d and f, UEs g and e, and UEs a and h may be configured as a group.

As described above, best relation based grouping has been described in section 1.5.2 based on the assumption that a low IDI value has a low index. However, best relation based grouping may be performed based on the assumption that a low IDI value has a high index. In this case, in FIG. 20, a predetermined number of high indexes may be selected and the above method may be identically applied.

In addition, instead of using an index value, grouping may be directly performed using a quantized IDI measurement value. That is, an eNB may perform grouping of UEs satisfying a threshold value directly using an IDI value. For example, in worst relation based grouping, UEs having IDI values equal to or greater than a specific threshold value are configured as one group and, in best relation based grouping, UEs having IDI values equal to or less than the specific threshold value may be configured as one group. In this case, the size of each group should satisfy a preset group size and a threshold value. For example, if the size of any group is preset to 3 and there are only two UEs satisfying the threshold value, the size of this group should be 2.

## 1.6 Transmission of grouping result information

In step S136, the eNB may transmit information about a configured group to UEs.

Specifically, the information about the configured group may be transmitted as follows according to the amount of downlink transmission.

As a first method, the eNB may transmit only group IDs to which UEs belong to all of the UEs. For example, information about the group IDs may be transmitted by allocating a bit through a DCI format of a PDCCH or through a PDSCH. Using the information, each UE may measure IDI for UEs other than UEs in a group to which the UE belongs.

As a second method, the eNB may transmit a group ID to which a UE belongs and neighbor group IDs to all UEs. For example, a group ID to which the UE belongs and neighbor group IDs may be transmitted through the PDCCH or the PDSCH. The eNB selects group IDs satisfying IDI values equal to or greater/less than a specific threshold value as neighbor group IDs using the reported IDI information and then transmits the neighbor group IDs. Next, each UE in a group ID may measure IDI only with respect to UEs belonging to the received neighbor group IDs, thereby reducing overhead for IDI measurement.

As a third method, the eNB may transmit all group IDs and UE_IDs belonging to corresponding groups to all UEs. For example, this information may be transmitted through the PDCCH or the PDSCH. As opposed to the second method, each UE measures IDI for one UE per group ID during IDI measurement and measures IDI only with respect to UEs belonging to a group satisfying an IDI value equal to or greater/less than a specific threshold value, thereby reducing overhead for IDI measurement.

Meanwhile, information transmitted to a UE may include measurement/reporting period information and this information may be transmitted through higher layer signaling such as RRC.

## 2. Second Embodiment

The second embodiment of the present invention relates to a method for updating grouping after initial grouping of the first embodiment is performed.

Grouping update indicates maintenance or update of group configuration due to IDI re-measurement or reporting in a situation in which a group is configured and operates in an FD mode on the same resource. A configured group may be changed due to participation of a new candidate UE in a group or dropping of a previous candidate UE from a group.

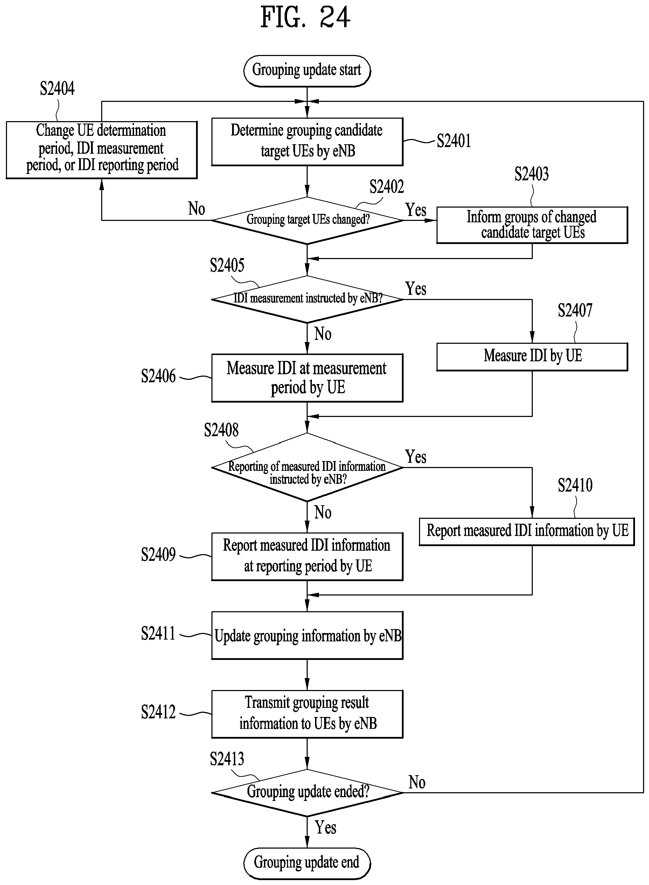

FIG. 24 is a flowchart illustrating grouping update according to a second embodiment of the present invention.

First, a grouping update procedure will now be described in brief. An eNB determines whether there is a candidate UE that desires to participate in grouping or a UE that desires to stop participating in an FD mode on the same resource (S2401). If a new candidate UE is present, the eNB informs all groups that the corresponding candidate UE is a target UE for IDI measurement and, if a UE that desires to stop participating in the FD mode is present, the eNB informs groups performing measurement of the corresponding UE that the UE desires to stop participating in a group (S2403). If there is no UE to be changed, a UE determination period, an IDI measurement period, or an IDI reporting period may be changed (S2404). IDI measurement by a UE may be performed according to a set period (S2406) or according to an instruction by the eNB (S2407). A UE measuring IDI may report IDI information to the eNB according to a set period (S2409) or according to an instruction by the eNB (S2410). The eNB updates group information of UEs based on the reported information (S2411) and transmits the updated group information to the corresponding UEs (S2412).

Hereinafter, each step of FIG. 24 will be described in detail.

<u>2.1 Determination of Grouping Candidate UE</u>

In step S2401, the eNB determines whether there is a new candidate UE that desires to participate in grouping or a UE that desires to stop participating in an FD mode on the same resource.
The UE that desires to stop participating in the FD mode operates in a fallback mode.

<u>2.1.1 Method of Determining Grouping Candidate UE</u>

The eNB may check whether there is a UE that desires to participate in the FD mode on the same resource using the following methods.
As a first method, an FDR device may allocate one bit indicating whether a corresponding UE has been included in a group through a UCI format of a PUCCH or a PUSCH. The eNB determines whether a UE is a grouping participation/dropping candidate UE using both this bit and the bit for a grouping participation request in FIG. 14. For example, if the grouping participation request bit is '1' and the bit indicating that a corresponding UE has been included in a group is '0', the UE corresponds to a new candidate UE that is to participate in grouping.

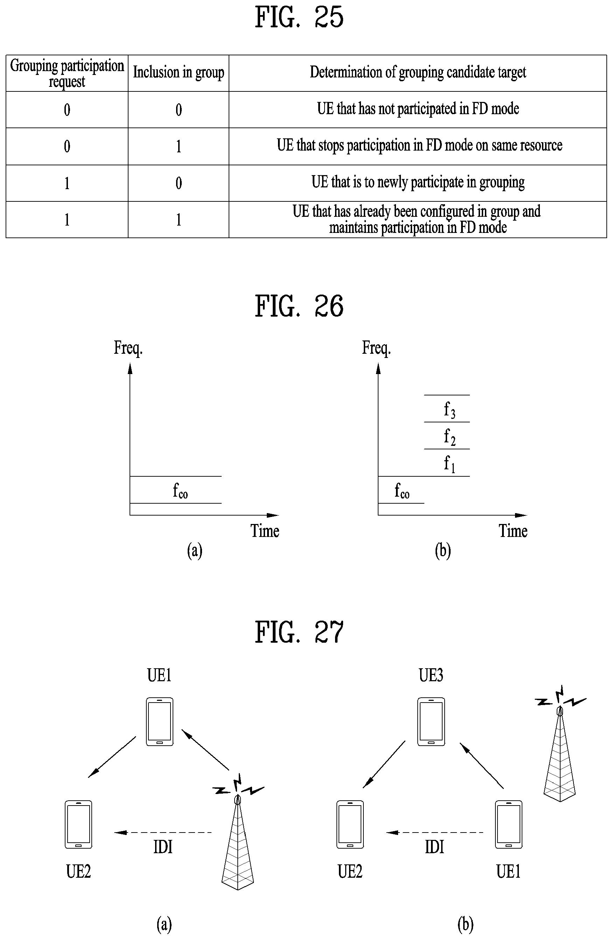

FIG. 25 illustrates an example of determining a grouping candidate UE using a bit for a grouping participation request and a bit indicating whether the UE has been included in a group.
As a second method, the eNB determines a grouping participation/dropping candidate UE using the bit for the grouping participation request in FIG. 14. If the eNB stores a group ID of a configured group and UE_IDs of UEs included in the group, the group ID and UE_IDs may be used instead of the bit indicating whether a corresponding UE has been included in a group. For example, if the grouping participation request bit is '1' and a UE_ID of a corresponding UE is not present in the stored UE_IDs, the eNB may determine that the UE is a new UE that is to participate in grouping.
As a third method, a UE transmits the grouping participation request bit in consideration of a state included in a group (e.g., reception of a corresponding group ID). In this case, the grouping participation request bit may be used instead of the bit allocated to indicate whether a corresponding UE has been included in a group. In this case, if the grouping participation bit is '0', the eNB may determine that the UE is to stop participating in the FD mode and, if the grouping participation bit is '1', the eNB may determine that the UE is a new UE that is to participate in grouping.

<u>2.1.2 Grouping Candidate Determination Timing</u>

The eNB may periodically perform grouping update. Specifically, grouping update may be performed with respect to UEs participating in an FD mode through steps S2403 and S2405. The determination timing and operation of grouping candidate UEs may be performed as follows.
As a first method, the eNB determines grouping candidate UEs whenever grouping update is performed.
As a second method, the eNB periodically determines grouping candidate UEs at a candidate UE determination period. The candidate UE determination period may be fixed or may be changed to be long in an environment in which a group is not frequently changed. In this case, when a group is changed or a grouping candidate UE is determined, the increased period may be reset to a first set period.
Specifically, the candidate UE determination period may be determined as follows relative to the grouping update period. As a first method, the candidate UE determination period may be shorter than the grouping update period. This method may be used when the eNB predetermines an FD mode participation stopping UE with respect to partial groups at every candidate UE determination period. As a second method, the candidate UE determination period may be longer than the grouping update period. In this case, overhead for determining candidate UEs can be reduced. If grouping update is performed at a period at which the candidate UEs are not determined, it may be determined that grouping target UEs are not changed in step S2402.
As a third method, the eNB may determine the grouping candidate UEs as a response to occurrence of a UE request. For example, a UE may request new participation in grouping through UE power-on or activation of an FDR device of a user. Alternatively, a UE may request dropping the FD mode by UE power-off, inactivation of an FDR device of a user, or a remaining power profile less than a reference value. The candidate UE determination period may be determined as an immediate period or a constant set period. Alternatively, when a UE moves between groups, the UE may request a grouping update.

Further, the candidate UE determination period may increase by simultaneously using the second method and the third method. In this case, overhead for determining the candidate UEs can be reduced.

<u>2.1.3 Determination of Grouping Candidate UE during Movement of UE between Groups</u>

Grouping update may be requested not only in the case in which a new candidate UE that is to participate in grouping or a UE that desires to stop participating in the FD mode on the same resource is present but also in the case in which UEs that have already been configured as a group move between groups. Operation when a UE moves between groups may be as follows.

As a first method, grouping update is performed with respect to all UEs at every grouping update or at a constant period.

As a second method, if the state of a UE is changed by a predetermined criterion or more, for example, if a UE moves at a high speed, the UE may operate in a fallback mode. This corresponds to FD mode participation stop of the FD and the UE drops from a grouping update procedure and operate as a new candidate UE that is to participate in grouping at a next grouping update timing.

As a third method, a new candidate UE that is to participate in grouping may directly transmit a request. For example, the UE may transmit the request by setting the bit for the grouping participation request to '1' and setting the bit indicating whether a corresponding UE has been included in a group to '0'. Upon receiving the request, the eNB determines whether a corresponding UE_ID is present in an IDI measurement target list or whether a set group ID is present. When there is a set group ID but '0' is received as the bit indicating whether the UE has been included in a group, the eNB may perform grouping update.

<u>2.1.4 Method of Allocating IDI Measurement Frequency to Grouping Candidate UE</u>

In step S2401, the eNB may allocate a frequency for IDI measurement to grouping candidate UEs as illustrated in FIG. 26.

FIG. 26 (a) illustrates exemplary allocation of a common frequency fco for IDI measurement to all UEs. In this case, all UEs use time for N subframes used when N UEs measure IDI as in step S1303.

FIG. 26 (b) illustrates exemplary allocation of different IDI measurement frequencies in a first time domain and a second time domain.

In the second time domain, if both the bit for the grouping participation request and the bit indicating whether a UE has been included in a group are '1', exclusive frequencies f1, f2, and f3 are allocated to respective groups during a partial time. UEs in each group commonly use a frequency allocated to the group.

In the first time domain, if the bit for the grouping participation request is '1' and the bit indicating whether a UE has been included in a group is '0', that is, if there is a UE that is to newly participate in grouping, the eNB allocates a common frequency fco for measuring the IDI of the UE to all UEs.

For example, if the number of UEs included in each of three groups is A and the number of UEs that are to newly participate in grouping is B, exclusive frequencies are allocated during A sub frames and a common frequency is allocated during B sub frames. In this case, B UEs transmit uplink signals during B sub frames and the other (3*A+(B-1)) UEs receive downlink signals during the same time, thereby performing IDI measurement.

In the method of FIG. 26(a), a total of (3*A+B) subframes is consumed for IDI measurement and, in the method of FIG. 26(b), a total of (A+B) subframes is consumed.

In the method of FIG. 26(b), since a UE which has a probability of being reconfigured as another group by moving into another group may not correctly consider a channel environment, the above two methods may be simultaneously performed with different periods. Hereinafter, for convenience of description, movement of a UE between groups will be included in change of a grouping candidate target UE.

<u>2.2 Change of Grouping Target UE</u>

In steps S2402 and S2403, the eNB may transmit information about a UE to be changed using the following methods after determining the grouping candidate target UE in step S2401.

By newly allocating UE_ID to a UE that is to newly participate in grouping, the eNB may inform grouping update target UEs (another new UE that desires to participate in grouping and all UEs in a current group except for a UE that is to stop participating in an FD mode) of the corresponding UE_ID or an IDI measurement target list in which the corresponding UE_ID is included. Such information may be transmitted through a PDCCH or a PDSCH. The IDI measurement target list may include UE_IDs of the grouping update target UEs or UE_IDs of UEs belonging to partial groups.

In consideration of scheduling or available resources, the eNB may transmit the UE_ID or the IDI measurement target list to all UEs in a current group except for a UE that is to stop participating in the FD mode or to a group to which a changed UE belongs. Such information may be transmitted through the PDCCH or the PDSCH.

If there are no UEs to be changed in step S2402, the eNB may transmit the IDI measurement target list through the PDCCH or the PDSCH. Alternatively, the eNB may allocate and transmit a bit indicating that a previous IDI measurement target list should be reused through the PDCCH or the PDSCH.

When UE has not received UE_ID, the IDI measurement target list, or the previous list reuse indicator (referred to as IDI measurement target list for ease of description), the UE may reuse the previous list. In this case, even when the UE has not received a UE_ID of an FD mode participation stopping UE, since there is no UE_ID during IDI measurement, an IDI measurement value is not present. If a UE that has not received the list has not received a UE_ID of a UE that is to participate in grouping, the UE may determine that there is IDI exceeding a total size of IDI and inform the eNB of the determined result. Alternatively, if a UE has not received the IDI measurement target list, the UE may request that the eNB retransmit the IDI measurement target list.

In step S2404, if there are no UEs to be changed with respect to a UE determination period, an IDI measurement period, or an IDI reporting period, which are determined by the eNB, or if there are no UEs to be changed within a predetermined time, a corresponding period may be increased. In this case, the eNB may increase the period by checking the case in which group configuration is not additionally changed, an IDI arrangement order in a group is not changed, or a variation occurs in IDI size less than a specific value in a group.

2.3 Interference Measurement

In steps S2405 and S2407, the eNB may instruct grouping update target UEs to perform IDI measurement. Then, the UEs may immediately measure IDI. Alternatively, the eNB may instruct partial groups including FD mode participation stopping UEs to perform IDI measurement. Even when there is a measurement period as in step S2406, the eNB may instruct a UE to perform IDI measurement. For example, if the measurement period is long and a grouping target UE is not frequently changed, when the grouping target UE is changed, the eNB may instruct the UE to measure IDI.

In step S2406, the UE may periodically measure IDI using a measurement/reporting period included in information transmitted by the eNB to the UE in step S1306 or S2412 or using a period set as a system parameter. Periodic IDI measurement by the UE may be performed using the following methods.

As a first method, an X time or a Transmit Time Interval (TTI) period is set as a system parameter and IDI for all UEs is measured.

As a second method, a Y time or TTI period different from the X time or TTI is set as the system parameter and IDI only for partial groups in which an FD mode participation stopping UE is included is measured. According to how many grouping target UEs are changed, the case in which Y>X may occur.

The above two methods may be simultaneously used and, in this case, overhead for IDI measurement can be reduced.

The UE measures IDI using a frequency allocated for IDI measurement in step S2401.

Meanwhile, in steps S2406 and S2407, the UE may deny IDI measurement based on a remaining power profile.

2.4 Interference Information Reporting

Next, in steps S2408 and S2410, the eNB may instruct grouping update target UEs to report measured IDI information. Then, the UEs may immediately report the measured IDI information. The UEs may perform measurement IDI information reporting only for a group in which an IDI arrangement order is changed or a variation in IDI size equal to or greater than a specific value occurs. Even when a period is present as in step S2409, if the eNB instructs the UE to perform IDI measurement only for partial groups including FD mode participation stopping UEs, the eNB may instruct the UEs of the corresponding groups to report IDI information.

In step S2409, the UE may periodically report UE indexes and IDI Information in the form of step S134 using a measurement/reporting period included in the information transmitted by the eNB to the UE in steps S136 and S2412 or using a period set as a system parameter. Periodic interference information reporting by the UE may be performed as follows.

As a first method, an X time or a TTI period is set as a system parameter and IDI measured for all UEs and UE indexes may be reported.

As a second method, a Y time or a TTI period different from the X time or TTI is set as the system parameter and IDI measured only for partial groups in which FD mode participation stopping UEs are included and UE indexes may be reported. According to how many grouping target UEs are changed, the case in which Y>X may occur.

The above two methods may be simultaneously used and, in this case, overhead for IDI information reporting can be reduced.

If an IDI arrangement order is not changed or a variation in IDI size equal to or less than a specific value occurs, reporting may not be performed in steps S2409 and S2410 and, instead, an indicator indicating that reference is made to previous reporting may be transmitted to the eNB through the PUCCH or the PUSCH. In this case, steps S2411 and S2412 may be omitted. As in step S134, not only information about IDI but also information not based on an IDI measurement value, which may be considered for grouping, may be further transmitted to the eNB.

When the eNB has not received reporting from the UE for a predetermined time, the eNB may perform steps S2411 and S2412 by referring to previous reporting by default. Alternatively, steps S2411 and S2412 may be omitted.

As described above, in steps S2406 and S2407, the UE may deny IDI measurement due to a remaining power profile, etc. That is, the UE may not perform transmission of a distinction signal between UEs and a hearing attempt. In this case, a bit indicating that IDI measurement has been denied may be transmitted in steps S2409 and S2410 through the PUCCH or the PUSCH. Alternatively, the UE may not perform any reporting and the eNB may check a UE having a remarkably decreased IDI value while waiting for reporting. Through this, the eNB may be aware that the checked UE is the UE that has denied IDI measurement.

2.5 Grouping Information Update

In step S2411, grouping may be performed using the same method as in S135. In addition, the eNB may store a previous group ID allocated for each UE. Thus, the eNB may check UEs having frequently changed group IDs and may perform the following operations.

First, when multiple group IDs are allocated to one UE, the eNB may recognize that the UE is located at a boundary between groups. The IDI value measured by this UE may be used as a threshold referenced for grouping.

Second, if a group ID which is not repeated within a predetermined time with respect to any one UE is allocated, the eNB may be aware that the UE moves. Since IDI measurement/reporting and grouping should always be performed with respect to such a UE, the eNB may remove the UE from the FD mode on the same resource through fallback.

Step S2412 may be performed identically to step S136. If a result of performing grouping in step S2411 is not changed, a signal indicating that grouping information transmitted previously to UEs should be maintained may be transmitted to UEs belonging to a group having an unchanged grouping result. This information may be indicated by allocating one bit through the DCI format of a PDCCH or through a PDSCH.

If there is no grouping participation request any more in step S2413, the eNB ends grouping update.

The present invention is applicable even to a situation in which a UE performs an FD mode operation on the same resource.

FIG. 27 illustrates an exemplary FD mode operation performed by a UE on the same resource.

As in FIG. 27(a), since a UE may receive IDI from an eNB, the present invention may be applied by regarding the eNB as the UE in the above description. In this case, an IDI reporting procedure and grouping result information transmission within the eNB are not performed.

The present invention is applicable to a situation in which a UE performs an FD mode operation on the same resource when there is no data relaying by an eNB as in D2D communication of FIG. 27(b). While data transmission through the eNB is not performed in D2D communication, the UE performs feedback to the eNB for scheduling management by the eNB. Therefore, the procedure of the present invention may be identically performed.

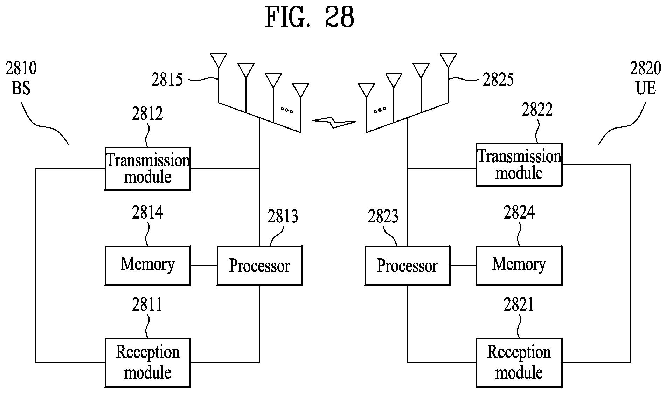

FIG. 28 illustrates a BS and a UE that are applicable to an embodiment of the present invention.

If a wireless communication system includes a relay, communication on a backhaul link is performed between the BS and the relay and communication on an access link is performed between the relay and the UE. Accordingly, the BS or the UE shown in FIG. 20 may be replaced with the relay according to situation.

Referring to FIG. 28, a wireless communication system includes a BS 2810 and a UE 2820. The BS 2810 includes a processor 2813, a memory 2814, and Radio Frequency (RF) units 2811 and 2812. The processor 2813 may be configured to perform the procedures and/or methods proposed in the present invention. The memory 2814 is connected to the processor 2813 and stores various types of information related to operations of the processor 2813. The RF units 2811 and 2812 are connected to the processor 2813 and transmit and/or receive radio signals. The UE 2820 includes a processor 2823, a memory 2824, and RF units 2821 and 2822. The processor 2823 may be configured to perform the proposed procedures and/or methods according to the present invention. The memory 2824 is connected to the processor 2823 and stores various types of information related to operations of the processor 2823. The RF units 2812 and 2822 are connected to the processor 2823 and transmit and/or receive radio signals. The BS 2810 and/or the UE 2820 may include a single antenna or multiple antennas.

The embodiments of the present invention described above are combinations of elements and features of the present invention in a predetermined form. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present invention or included as a new claim by subsequent amendment after the application is filed. A specific operation described as being performed by the BS in this disclosure may be performed by an upper node of the BS in some cases. That is, it is apparent that, in a network comprised of a plurality of network nodes including the BS, various operations performed for communication with the UE can be performed by the BS or network nodes other than the BS. The term BS may be replaced with the terms fixed station, Node B, eNode B (eNB), access point, etc.

The embodiments of the present invention may be achieved by various means, for example, hardware, firmware, software, or a combination thereof. In a hardware configuration, the methods according to exemplary embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, an embodiment of the present invention may be implemented in the form of a module, a procedure, a function, etc. Software code may be stored in a memory unit and executed by a processor. The memory unit may be located at the interior or exterior of the processor and may transmit and receive data to and from the processor via various known means.

The memory unit may be located inside or outside the processor to exchange data with the processor by various known means.

The detailed description of the preferred embodiments of the present invention has been given to enable those skilled in the art to implement and practice the invention. Although the invention has been described with reference to exemplary embodiments, those skilled in the art will appreciate that various modifications and variations can be made in the present invention without departing from the scope of the invention described in the appended claims. Accordingly, the invention should not be limited to the specific embodiments described herein, but should be accorded the broadest scope consistent with the principles and novel features disclosed herein.

The scope of the invention should be determined by reasonable interpretation of the appended claims.

[Industrial Applicability]

The present invention may be used in wireless communication devices such as a UE, a relay, and an eNB.

**Claims**

1. A method of allocating a resource by a Base Station, BS, (2810) in a wireless access system supporting Full Duplex Radio, FDR, transmission, the method comprising:

    selecting (S131) candidate FDR UEs to be configured as a group among a plurality of FDR UEs, wherein the candidate FDR UEs are selected in response to a reception of a request from the plurality of FDR UEs for participating in a Full Duplex, FD, mode on a same resource;
    transmitting (S132) information about group configuration to the candidate FDR UEs;
    receiving (S134) interference information about inter-device interference from the candidate FDR UEs, wherein the inter-device interference is interference caused by several FDR UEs in FDR transmission using the same resource;
    configuring (S135) the candidate FDR UEs as the group based on the interference information; and
    allocating (S136) a resource to the candidate FDR UEs configured as the group on a group basis.

2. The method according to claim 1,
   wherein the group is configured to include a plurality of FDR UEs having great interference, and
   wherein the allocating the resource includes :

    allocating the resource such that the FDR UEs included in the group use different resources, and FDR UEs included in different groups operate in the FD mode on the same resource, and
    wherein the group is configured to include FDR UEs having values of the interference information equal to or greater than a threshold value to configure a worst relation based group.

**3.** The method according to claim 1,
wherein the group is configured to include a plurality of FDR UEs having less interference, and
wherein the allocating the resource includes :

allocating the resource such that the FDR UEs included in the group operate in the FD mode on the same resource, and FDR UEs included in different groups use different resources, and
wherein the group is configured to include FDR UEs having values of the interference information equal to or less than a threshold value to configure a best relation based group.

**4.** The method according to claim 1,
wherein the interference information includes values indexed in order of magnitude of interference value measured by the candidate FDR UEs with respect to a plurality of neighbor FDR UEs.

**5.** A Base Station, BS, (2810) for allocating a resource in a wireless access system supporting Full Duplex Radio, FDR, transmission, the BS (2810) comprising:

a Radio Frequency, RF, unit (2811, 2812); and
a processor (2813),
wherein the processor (2813) is configured to:

select candidate FDR UEs to be configured as a group among a plurality of UEs, wherein the candidate FDR UEs are selected in response to a reception of a request from the plurality of FDR UEs for participating in a Full Duplex, FD, mode on a same resource;
transmit information about group configuration to the candidate FDR UEs;
receive interference information about inter-device interference from the candidate FDR UEs, wherein the inter-device interference is interference caused by a plurality of FDR UEs in FDR transmission using the same resource;
configure of the candidate FDR UEs as the group based on the interference information; and
allocate a resource to the candidate FDR UEs configured as the group on a group basis.

**6.** The BS (2810) according to claim 5,
wherein the group is configured to include a plurality of FDR UEs having great interference, and
wherein the processor (2813) allocates the resource such that the FDR UEs included in the group use different resources, and FDR UEs included in different groups operate in a Full Duplex, FD, mode on the same resource, and
wherein the group is configured to include FDR UEs having values of the interference information equal to or greater than a threshold value to configure a worst relation based group.

**7.** The BS (2810) according to claim 5,
wherein the group is configured to include a plurality of FDR UEs having less interference, and
wherein the processor (2813) allocates the resource such that the FDR UEs included in the group operate in a Full Duplex, FD, mode on a same resource, and FDR UEs included in different groups use different resources, and
wherein the group is configured to include FDR UEs having values of the interference information equal to or less than a threshold value to configure a best relation based group.

**8.** The BS (2810) according to claim 5,
wherein the interference information includes values indexed in order of magnitude of interference value measured by the candidate FDR UEs with respect to a plurality of neighbor FDR UEs.

**Patentansprüche**

**1.** Verfahren zum Zuweisen einer Ressource durch eine Basisstation, BS, (2810) in einem Drahtloszugangssystem, das Vollduplexfunk-, FDR-, Übertragung unterstützt, wobei das Verfahren aufweist:

Auswählen (S131) von Kandidaten-FDR-UEs, die als eine Gruppe konfiguriert werden sollen, aus mehreren FDR-UEs, wobei die Kandidaten-FDR-UEs ansprechend auf einen Empfang einer Anforderung von den mehreren FDR-UEs für die Teilnahme an einer Vollduplex-, FD-, Betriebsart auf einer gleichen Ressource ausgewählt werden;

Übertragen (S132) von Informationen über die Gruppenkonfiguration an die Kandidaten-FDR-UEs;
Empfangen (S134) von Interferenzinformationen über die Zwischenvorrichtungsinterferenz von den Kandidaten-FDR-UEs, wobei die Zwischenvorrichtungsinterferenz die Interferenz ist, die bei der FDR-Übertragung durch mehrere FDR-UEs unter Verwendung der gleichen Ressource verursacht wird;
Konfigurieren (S135) der Kandidaten-FDR-UEs als die Gruppe basierend auf den Interferenzinformationen; und
Zuweisen (S136) einer Ressource an die Kandidaten-FDR-UEs, die als die Gruppe konfiguriert sind, auf einer Gruppenbasis.

2. Verfahren nach Anspruch 1,
wobei die Gruppe derart konfiguriert ist, dass sie mehrere FDR-UEs mit großer Interferenz umfasst, und
wobei das Zuweisen der Ressource umfasst:

Zuweisen der Ressource, so dass die in der Gruppe enthaltenen FDR-UEs verschiedene Ressourcen verwenden, und in verschiedenen Gruppen enthaltene FDR-UEs in der FD-Betriebsart auf der gleichen Ressource arbeiten, und
wobei die Gruppe derart konfiguriert ist, dass sie FDR-UEs mit Werten der Interferenzinformationen umfasst, die größer oder gleich einem Schwellwert sind, um eine Gruppe auf Basis einer ungünstigsten Beziehung zu konfigurieren.

3. Verfahren nach Anspruch 1,
wobei die Gruppe derart konfiguriert ist, dass sie mehrere FDR-UEs mit weniger Interferenz umfasst, und
wobei das Zuweisen der Ressource umfasst:

Zuweisen der Ressource derart, dass die in der Gruppe enthaltenen FDR-UEs in der FD-Betriebsart auf der gleichen Ressource arbeiten und FDR-UEs, die in verschiedenen Gruppen enthalten sind, verschiedene Ressourcen verwenden, und
wobei die Gruppe derart konfiguriert ist, dass sie FDR-UEs mit Werten der Interferenzinformationen umfasst, die kleiner oder gleich einem Schwellwert sind, um eine Gruppe auf Basis einer besten Beziehung zu konfigurieren.

4. Verfahren nach Anspruch 1,
wobei die Interferenzinformationen Werte umfassen, die in der Reihenfolge der Größe des Interferenzwerts indiziert werden, die von den Kandidaten-FDR-UEs in Bezug auf mehrere Nachbar-FDR-UEs gemessen werden.

5. Basisstation, BS, (2810) zum Zuweisen einer Ressource in einem Drahtloszugangssystem, das Vollduplexfunk-, FDR-, Übertragung unterstützt, wobei die BS (2810) aufweist:

eine Funkfrequenz-, RF-, Einheit (2811, 2812); und
einen Prozessor (2813),
wobei der Prozessor (2813) konfiguriert ist, um:

Kandidaten-FDR-UEs, die als eine Gruppe konfiguriert werden sollen, aus mehreren FDR-UEs auszuwählen, wobei die Kandidaten-FDR-UEs ansprechend auf einen Empfang einer Anforderung von den mehreren FDR-UEs für die Teilnahme an einer Vollduplex-, FD-, Betriebsart auf einer gleichen Ressource ausgewählt werden;
Informationen über die Gruppenkonfiguration an die Kandidaten-FDR-UEs zu übertragen;
Interferenzinformationen über die Zwischenvorrichtungsinterferenz von den Kandidaten-FDR-UEs zu empfangen, wobei die Zwischenvorrichtungsinterferenz die Interferenz ist, die bei der FDR-Übertragung durch mehrere FDR-UEs unter Verwendung der gleichen Ressource verursacht wird;
die Kandidaten-FDR-UEs basierend auf den Interferenzinformationen als die Gruppe zu konfigurieren; und
eine Ressource an die Kandidaten-FDR-UEs, die als die Gruppe konfiguriert sind, auf einer Gruppenbasis zuzuweisen.

6. BS (2810) nach Anspruch 5,
wobei die Gruppe derart konfiguriert ist, dass sie mehrere FDR-UEs mit großer Interferenz umfasst, und
wobei der Prozessor (2813) die Ressource zuweist, so dass die in der Gruppe enthaltenen FDR-UEs verschiedene Ressourcen verwenden, und in verschiedenen Gruppen enthaltene FDR-UEs in der FD-Betriebsart auf der gleichen Ressource arbeiten, und

wobei die Gruppe derart konfiguriert ist, dass sie FDR-UEs mit Werten der Interferenzinformationen umfasst, die größer oder gleich einem Schwellwert sind, um eine Gruppe auf Basis einer ungünstigsten Beziehung zu konfigurieren.

7. BS (2810) nach Anspruch 5,
wobei die Gruppe derart konfiguriert ist, dass sie mehrere FDR-UEs mit weniger Interferenz umfasst, und
wobei der Prozessor (2813) die Ressource derart zuweist, dass die in der Gruppe enthaltenen FDR-UEs in der Vollduplex-, FD-, Betriebsart auf einer gleichen Ressource arbeiten und FDR-UEs, die in verschiedenen Gruppen enthalten sind, verschiedene Ressourcen verwenden, und
wobei die Gruppe derart konfiguriert ist, dass sie FDR-UEs mit Werten der Interferenzinformationen umfasst, die kleiner oder gleich einem Schwellwert sind, um eine Gruppe auf Basis einer besten Beziehung zu konfigurieren.

8. BS (2810) nach Anspruch 5,
wobei die Interferenzinformationen Werte umfassen, die in der Reihenfolge der Größe des Interferenzwerts indiziert werden, die von den Kandidaten-FDR-UEs in Bezug auf mehrere Nachbar FDR-UEs gemessen werden.

**Revendications**

1. Procédé d'attribution d'une ressource par une station de base, BS, (2810) dans un système d'accès sans fil prenant en charge une émission radio bidirectionnelle simultanée, FDR, le procédé comprenant :

   la sélection (S131) d'UE FDR candidats devant être configurés comme un groupe parmi une pluralité d'UE FDR, dans lequel les UE FDR candidats sont sélectionnés en réponse à une réception d'une requête en provenance de la pluralité d'UE FDR pour participer à un mode bidirectionnel simultané, FD, sur une même ressource ;
   l'émission (S132) d'informations sur une configuration de groupe aux UE FDR candidats ;
   la réception (S134) d'informations d'interférence concernant des interférences entre dispositifs à partir des UE FDR candidats, dans lequel les interférences entre dispositifs sont des interférences causées par plusieurs UE FDR dans une émission FDR utilisant la même ressource ;
   la configuration (S135) des UE FDR candidats comme le groupe sur la base des informations d'interférence ; et
   l'attribution (S136) d'une ressource aux UE FDR candidats configurés comme le groupe sur une base de groupe.

2. Procédé selon la revendication 1,
dans lequel le groupe est configuré pour inclure une pluralité d'UE FDR subissant d'importantes interférences, et dans lequel l'attribution de la ressource inclut :

   l'attribution de la ressource de sorte que les UE FDR inclus dans le groupe utilisent des ressources différentes, et des UE FDR inclus dans des groupes différents fonctionnent dans le mode FD sur la même ressource, et dans lequel le groupe est configuré pour inclure des UE FDR ayant des valeurs des informations d'interférence égales ou supérieures à une valeur d'interférence pour configurer un groupe basé sur les pires relations.

3. Procédé selon la revendication 1,
dans lequel le groupe est configuré pour inclure une pluralité d'UE FDR subissant des interférences moindres, et dans lequel l'attribution de la ressource inclut :

   l'attribution de la ressource de sorte que les UE FDR inclus dans le groupe fonctionnent dans le mode FD sur la même ressource, et des UE FDR inclus dans des groupes différents utilisent des ressources différentes, et dans lequel le groupe est configuré pour inclure des UE FDR ayant des valeurs des informations d'interférence égales ou inférieures à une valeur de seuil pour configurer un groupe basé sur les meilleures relations.

4. Procédé selon la revendication 1,
dans lequel les informations d'interférence incluent des valeurs indexées dans un ordre de grandeur d'une valeur d'interférence mesurée par les UE FDR candidats par rapport à une pluralité d'UE FDR voisins.

5. Station de base, BS, (2810) permettant d'attribuer une ressource dans un système d'accès sans fil prenant en charge une émission radio bidirectionnelle simultanée, FDR, la BS (2810) comprenant :

une unité radiofréquence, RF, (2811, 2812) ; et
un processeur (2813),
dans laquelle le processeur (2813) est configuré pour :

sélectionner des UE FDR candidats devant être configurés comme un groupe parmi une pluralité d'UE, dans laquelle les UE FDR candidats sont sélectionnés en réponse à une réception d'une requête en provenance de la pluralité d'UE FDR pour participer à un mode bidirectionnel simultané, FD, sur une même ressource ;

émettre des informations concernant une configuration de groupe aux UE FDR candidats ;

recevoir des informations d'interférence concernant des interférences entre dispositifs à partir des UE FDR candidats, dans laquelle les interférences entre dispositifs sont des interférences causées par une pluralité d'UE FDR dans une émission FDR utilisant la même ressource ;

configurer les UE FDR candidats comme le groupe sur la base des informations d'interférence ; et

attribuer une ressource aux UE FDR candidats configurés comme le groupe sur une base de groupe.

6. BS (2810) selon la revendication 5,
dans laquelle le groupe est configuré pour inclure une pluralité d'UE FDR subissant d'importantes interférences, et
dans laquelle le processeur (2813) attribue la ressource de sorte que les UE FDR inclus dans le groupe utilisent des ressources différentes, et des UE FDR inclus dans des groupes différents fonctionnent dans un mode bidirectionnel simultané, FD, sur la même ressource, et
dans laquelle le groupe est configuré pour inclure des UE FDR ayant des valeurs des informations d'interférence égales ou supérieures à une valeur de seuil pour configurer un groupe basé sur les pires relations.

7. BS (2810) selon la revendication 5,
dans laquelle le groupe est configuré pour inclure une pluralité d'UE FDR subissant des interférences moindres, et
dans laquelle le processeur (2813) attribue la ressource de sorte que les UE FDR inclus dans le groupe fonctionnent dans un mode bidirectionnel simultané, FD, sur une même ressource, et des UE FDR inclus dans des groupes différents utilisent des ressources différentes, et
dans laquelle le groupe est configuré pour inclure des UE FDR ayant des valeurs des informations d'interférence égales ou inférieures à une valeur de seuil pour configurer un groupe basé sur les meilleures relations.

8. BS (2810) selon la revendication 5,
dans laquelle les informations d'interférence incluent des valeurs indexées dans un ordre de grandeur d'une valeur d'interférence mesurée par les UE FDR candidats par rapport à une pluralité d'UE FDR voisins.

# FIG. 1

Radio frame

| #0 | #1 | #2 | · · · | #18 | #19 |
|---|---|---|---|---|---|

Slot

Sub-frame

(a)

One radio frame, $T_s = 307200T = 10ms$

One half-frame, $T_s = 153600T = 5ms$

One slot, $T_{slot} = 15360T_s$

$30720T_s$

| Subframe#0 | | | | Subframe#2 | Subframe#3 | Subframe#4 | Subframe#5 | | | | Subframe#7 | Subframe#8 | Subframe#9 |
|---|---|---|---|---|---|---|---|---|---|---|---|---|---|

One subframe, $30720T_s$

DwPTS  GP  UpPTS

DwPTS  GP  UpPTS

(b)

EP 3 125 632 B1

# FIG. 2

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

# FIG. 3

Control region     Data region

Frequency

1st slot     2nd slot

One sub-frame

Time

# FIG. 4

# FIG. 5

(a)

(b)

# FIG. 6

# FIG. 7

Control region      Data region

Frequency

Time

CRS

DM RS ( CDM group 1 )

DM RS ( CDM group 2 )

# FIG. 8

# FIG. 9

FIG. 10

EP 3 125 632 B1

FIG. 11

IDI

UE2                                    UE1

# FIG. 12

# FIG. 13

Grouping start

Determine group candidate UEs by eNB — S131

Transmit information for grouping to group candidate UEs by eNB — S132

Measure IDI by group candidate UEs — S133

Report information about IDI to eNB by group candidate UEs — S134

Perform grouping of UEs based on reported information by eNB — S135

Transmit information about grouping result to UEs by eNB — S136

Grouping end

# FIG. 14

| 00x | FDR non-support |
|---|---|
| 010 | FD mode operation: X, FD mode support: O, Grouping participation request: X |
| 011 | FD mode operation: X, FD mode support: O, Grouping participation request: O |
| 100 | FD mode operation: O, FD mode support: X, Grouping participation request: X |
| 101 | FD mode operation: O, FD mode support: X, Grouping participation request: O |
| 110 | FD mode operation: O, FD mode support: O, Grouping participation request: X |
| 111 | FD mode operation: O, FD mode support: O, Grouping participation request: O |

# FIG. 15

(a)                                                            (b)

# FIG. 16

|   | a | b | c | d | e | f | g | h |
|---|---|---|---|---|---|---|---|---|
| a | 0 | 3 | 7 | 1 | 4 | 5 | 2 | 6 |
| b | 7 | 0 | 6 | 2 | 1 | 3 | 4 | 5 |
| c | 7 | 4 | 0 | 5 | 3 | 1 | 6 | 2 |
| d | 2 | 3 | 7 | 0 | 4 | 5 | 1 | 6 |
| e | 7 | 1 | 4 | 3 | 0 | 2 | 6 | 5 |
| f | 7 | 4 | 1 | 5 | 3 | 0 | 6 | 2 |
| g | 2 | 3 | 7 | 1 | 4 | 6 | 0 | 5 |
| h | 7 | 3 | 1 | 6 | 4 | 2 | 5 | 0 |

Target UE

Measurement UE

# FIG. 17

| a | b | c | d | e | f | g | h |
|---|---|---|---|---|---|---|---|
| 4.875 | 2.625 | 4.125 | 2.875 | 2.875 | 3 | 3.75 | 3.875 |

# FIG. 18

|   | a | b | c | d | e | f | g | h |   |
|---|---|---|---|---|---|---|---|---|---|
| a | 0 | 3 | 7 | 1 | 4 | 5 | 2 | 6 | 2 |
| b | 7 | 0 | 6 | 2 | 1 | 3 | 4 | 5 | 3.8 |
| c | 7 | 4 | 0 | 5 | 3 | 1 | 6 | 2 | 3.25 |
| d | 2 | 3 | 7 | 0 | 4 | 5 | 1 | 6 | 2 |
| e | 7 | 1 | 4 | 3 | 0 | 2 | 6 | 5 | 3.8 |
| f | 7 | 4 | 1 | 5 | 3 | 0 | 6 | 2 | 3.25 |
| g | 2 | 3 | 7 | 1 | 4 | 6 | 0 | 5 | 2.75 |
| h | 7 | 3 | 1 | 6 | 4 | 2 | 5 | 0 | 3.25 |

## FIG. 19

|   | b | c | e | f | h |   |
|---|---|---|---|---|---|---|
| b | 0 | 6 | 1 | 3 | 5 | 1 |
| c | 4 | 0 | 3 | 1 | 2 | 2 |
| e | 1 | 4 | 0 | 2 | 5 | 1.5 |
| f | 4 | 1 | 3 | 0 | 2 | 2 |
| h | 3 | 1 | 4 | 2 | 0 | 2 |

## FIG. 20

|   | a | b | c | d | e | f | g | h |
|---|---|---|---|---|---|---|---|---|
| a | 0 | 5 | 1 | 7 | 4 | 3 | 6 | 2 |
| b | 1 | 0 | 2 | 6 | 7 | 5 | 4 | 3 |
| c | 1 | 4 | 0 | 3 | 5 | 7 | 2 | 6 |
| d | 6 | 5 | 1 | 0 | 4 | 3 | 7 | 2 |
| e | 1 | 7 | 4 | 5 | 0 | 6 | 2 | 3 |
| f | 1 | 4 | 7 | 3 | 5 | 0 | 2 | 6 |
| g | 6 | 5 | 1 | 7 | 4 | 2 | 0 | 3 |
| h | 1 | 5 | 7 | 2 | 4 | 6 | 3 | 0 |

## FIG. 21

|   | a | d | e | f | g | h |
|---|---|---|---|---|---|---|
| a | 0 | 7 | 4 | 3 | 6 | 2 |
| d | 6 | 0 | 4 | 3 | 7 | 2 |
| e | 1 | 5 | 0 | 6 | 2 | 3 |
| f | 1 | 3 | 5 | 0 | 2 | 6 |
| g | 6 | 7 | 4 | 2 | 0 | 3 |
| h | 1 | 2 | 4 | 6 | 3 | 0 |

EP 3 125 632 B1
FIG. 22

|   | a | e | g | h |
|---|---|---|---|---|
| a | 0 | 4 | 6 | 2 |
| e | 1 | 0 | 2 | 3 |
| g | 6 | 4 | 0 | 3 |
| h | 1 | 4 | 3 | 0 |

(a)

|   | a | h |
|---|---|---|
| a | 0 | 2 |
| h | 1 | 0 |

(b)

FIG. 23

39

# FIG. 24

Grouping update start

S2404

Change UE determination period, IDI measurement period, or IDI reporting period

Determine grouping candidate target UEs by eNB — S2401

S2403

S2402

No ← Grouping target UEs changed? → Yes → Inform groups of changed candidate target UEs

S2405

IDI measurement instructed by eNB? → Yes

S2407

No

Measure IDI by UE

S2406 — Measure IDI at measurement period by UE

S2408

Reporting of measured IDI information instructed by eNB? → Yes

S2410

No

Report measured IDI information by UE

S2409 — Report measured IDI information at reporting period by UE

S2411 — Update grouping information by eNB

S2412 — Transmit grouping result information to UEs by eNB

S2413

Grouping update ended? → No

Yes

Grouping update end

# FIG. 25

| Grouping participation request | Inclusion in group | Determination of grouping candidate target |
|:---:|:---:|:---:|
| 0 | 0 | UE that has not participated in FD mode |
| 0 | 1 | UE that stops participation in FD mode on same resource |
| 1 | 0 | UE that is to newly participate in grouping |
| 1 | 1 | UE that has already been configured in group and maintains participation in FD mode |

# FIG. 26

(a)

(b)

# FIG. 27

(a)

(b)

# FIG. 28

**EP 3 125 632 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013134930 A1